(19) Europäisches Patentamt
European Patent Office
Office européen des brevets

(11) **EP 2 981 734 B1**

(12) **EUROPÄISCHE PATENTSCHRIFT**

(45) Veröffentlichungstag und Bekanntmachung des Hinweises auf die Patenterteilung:
**10.07.2019   Patentblatt 2019/28**

(21) Anmeldenummer: **14720473.9**

(22) Anmeldetag: **19.03.2014**

(51) Int Cl.:
*F16F 15/14* *(2006.01)*     *F16F 15/123* *(2006.01)*

(86) Internationale Anmeldenummer:
**PCT/DE2014/200129**

(87) Internationale Veröffentlichungsnummer:
**WO 2014/161539 (09.10.2014 Gazette 2014/41)**

(54) **DREHMOMENTÜBERTRAGUNGSEINRICHTUNG**

TORQUE TRANSMISSION DEVICE

DISPOSITIF DE TRANSMISSION DE COUPLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.04.2013   DE 102013205802**
**08.04.2013   DE 102013005872**
**08.04.2013   DE 102013206155**
**06.12.2013   DE 102013225060**
**19.02.2014   DE 102014203012**
**19.02.2014   DE 102014203016**

(43) Veröffentlichungstag der Anmeldung:
**10.02.2016   Patentblatt 2016/06**

(73) Patentinhaber: **Schaeffler Technologies AG & Co. KG**
**91074 Herzogenaurach (DE)**

(72) Erfinder:
• **VÖGTLE, Benjamin**
**76137 Karlsruhe (DE)**
• **KRAUSE, Thorsten**
**77815 Bühl (DE)**

(56) Entgegenhaltungen:
**DE-A1-102011 010 342     DE-A1-102012 205 793**

**Beschreibung**

Die Erfindung betrifft eine Drehmomentübertragungseinrichtung gemäß Patentanspruch 1.

Es sind Drehmomentübertragungseinrichtungen mit einer Eingangsseite, einer Ausgangsseite, einer Kupplung und einer Dämpfereinrichtung bekannt. Die Dämpfereinrichtung kann dabei als hydrodynamischer Wandler ausgebildet sein, der in einem ersten Betriebszustand ein mittels der Drehmomentübertragungseinrichtung zu übertragendes Drehmoment von der Eingangsseite hin zur Ausgangsseite überträgt und durch eine Kupplungseinrichtung in einen zweiten Betriebszustand überbrückt wird. Ferner ist bekannt, dass ein Fliehkraftpendel in der Drehmomentübertragungseinrichtung vorgesehen wird, um Drehschwingungen in dem zu übertragenden Drehmoment zu dämpfen.

DE 10 2011 010 342 A1 offenbart eine gattungsgemäße Drehmomentübertragungseinrichtung.

Es ist Aufgabe der Erfindung, eine verbesserte Drehmomentübertragungseinrichtung bereitzustellen.

Diese Aufgabe wird mittels einer Drehmomentübertragungseinrichtung gemäß Patentanspruch 1 gelöst. Vorteilhafte Ausführungsformen sind in den abhängigen Ansprüchen angegeben.

Erfindungsgemäß wurde erkannt, dass eine verbesserte Drehmomentübertragungseinrichtung für einen Abtriebsstrang eines Kraftfahrzeugs mit einem Hubkolbenmotor mit Zylinderabschaltung dadurch bereitgestellt werden kann, dass die Drehmomentübertragungseinrichtung eine Eingangsseite, eine Ausgangsseite, eine Kupplung und ein Dämpfersystem umfasst. Zwischen der Eingangsseite und der Ausgangsseite ist mittels der Kupplung ein Drehmomentschluss selektiv herstellbar. Das Dämpfersystem ist ausgebildet, eine Drehschwingung eines zwischen der Eingangsseite und der Ausgangsseite zu übertragenden Drehmoments zumindest teilweise zu reduzieren. Das Dämpfersystem umfasst wenigstens ein erstes und ein zweites Fliehkraftpendel, wenigstens ein Energiespeichersystem und eine Rotationsmasse. Ferner ist wenigstens eines der beiden Fliehkraftpendel mit dem Energiespeichersystem gekoppelt und das andere Fliehkraftpendel mit der Rotationsmasse und die Rotationsmasse mit dem Energiespeichersystem gekoppelt.

Diese Ausgestaltung hat den Vorteil, dass Drehschwingungen im zu übertragenden Drehmoment besonders wirksam gedämpft werden können.

In einer weiteren Ausführungsform weist der Hubkolbenmotor eine erste vordefinierte Haupterregung auf, wobei wenigstens das erste und/oder das zweite Fliehkraftpendel in seiner Abstimmungsordnung eine Abweichung von größer 2 Prozent, insbesondere größer 3 Prozent, vorzugsweise von größer 5 Prozent und kleiner 20 Prozent, vorzugsweise kleiner 10 Prozent, zu der ersten Haupterregerordnung aufweist. Durch die Abweichung der Abstimmungsordnung des Fliehkraftpendels zu der Haupterregerordnung des Hubkolbenmotors kann bei Antriebssträngen mit Zylinderabschaltung sowohl eine Dämpfung der Drehschwingungen des Hubkolbenmotors mit abgeschalteten Zylindern und mit deaktivierter Zylinderabschaltung wirksam erreicht werden.

In einer weiteren Ausführungsform weist der Hubkolbenmotor eine erste und eine zweite vordefinierte Haupterregerordnung auf, wobei die zweite Haupterregerordnung unterschiedlich zu der ersten Haupterregerordnung ist, wobei das zweite Fliehkraftpendel in seiner Abstimmungsordnung auf die zweite Haupterregerordnung des Hubkolbenmotors abgestimmt ist. Die Haupterregerordnung des Hubkolbenmotors ist direkt gekoppelt zu der Anzahl der Zylinder. Weist der Hubkolbenmotor eine Zylinderabschaltung auf, so weist der Hubkolbenmotor bei deaktivierter Zylinderabschaltung die erste Haupterregerordnung auf und bei aktivierter Zylinderabschaltung die zweite Haupterregerordnung. Durch die Abstimmung des zweiten Fliehkraftpendels in seiner Abstimmungsordnung auf die zweite Haupterregerordnung des Hubkolbenmotors können bei aktivierter Zylinderabschaltung Drehschwingungen im Drehmoment des Hubkolbenmotors zuverlässig gedämpft werden.

Gemäß der Erfindung ist vorgesehen, dass eine Abstimmungsordnung des ersten Fliehkraftpendels zu einer Abstimmungsordnung des zweiten Fliehkraftpendels ein Verhältnis von einem Wert aufweist, der in einem Bereich von 0,35 bis 2,75, vorzugsweise 0,45 bis 2,3, insbesondere vorzugsweise 0,5 bis 2,1 liegt.

In einer weiteren Ausführungsform weist der Hubkolbenmotor wenigstens eine erste vordefinierte Haupterregerordnung auf, wobei die beiden Fliehkraftpendel mit jeweils ihrer Abstimmungsordnung auf die erste Haupterregerordnung abgestimmt sind, wobei das Verhältnis der beiden Abstimmungsordnungen einen Wert aufweist, der in einem Bereich von 0,67 bis 1,5, vorzugsweise 0,8 bis 1,2, insbesondere vorzugsweise 0,9 bis 1,1 liegt. Dadurch kann eine Dämpfung des Hubkolbenmotors in seiner ersten Haupterregerordnung besonders wirksam ausfallen. Dies ist dahingehend von Vorteil, dass durch die Abweichung der beiden Abstimmungsordnungen der beiden Fliehkraftpendel zueinander, beiden unterschiedlichen Frequenzverhalten der beiden Fliehkraftpendel zur Abdeckung eines breiten Haupterregerordnungsbereichs genutzt werden können.

In einer weiteren Ausführungsform weist wenigstens eines der beiden Fliehkraftpendel einen Pendelflansch und wenigstens eine Pendelmasse auf, wobei die Pendelmasse sich radial von innen nach außen erstreckt, wobei die Pendelmasse mittels einer Kulissenführung mit dem Pendelflansch gekoppelt ist. Die Kulissenführung ist ausgebildet, die Pendelmasse entlang einer Pendelbahn zu führen. Die Pendelbahn ist derart geführt, dass die Pendelmasse eine erste Position und eine zweite radial innen liegend zur ersten Position angeordnete Position aufweist, wobei die Pendelmasse in jeder der beiden Positionen radial innen einen ersten Abstand und radial außen einen zweiten Abstand zu der Drehachse aufweist, wobei ein Verhältnis aus einer Differenz des ersten Abstands und des zweiten Abstands in der ersten Position zu einer Differenz des ersten Abstands in der ersten Position und dem zweiten Abstand in der zweiten Position einen Wert aufweist, der in einem Bereich von 0,05 bis 1, insbesondere 0,7 bis 1, besonders vorteilhafterweise 0,9 bis 1 liegt. Auf diese Weise kann eine Kulissenführung in der Konstruktion auf einfache Weise festgelegt werden.

In einer weiteren Ausführungsform weisen wenigstens beide Fliehkraftpendel wenigstens jeweils einen Pendelflansch und wenigstens jeweils eine Pendelmasse auf, wobei die Pendelmasse jedes Fliehkraftpendels mittels jeweils einer Kulissenführung mit dem korrespondierenden Pendelflansch gekoppelt ist, wobei eine Masse einer Pendelmasse des einen Fliehkraftpendels ein Verhältnis zu einer Masse der Pendelmassen des anderen Fliehkraftpendels einen Wert aufweist, der in einem Bereich von 0,15 bis 6, vorzugsweise 0,25 bis 4, insbesondere vorteilhafterweise von 0,5 bis 2 liegt.

In einer weiteren Ausführungsform umfasst das Dämpfersystem eine Dämpfereinrichtung mit einer Dämpfereingangsseite und einer Dämpferausgangsseite, wobei die Dämpfereinrichtung wenigstens ein Dämpferelement umfasst, wobei das Dämpferelement ausgebildet ist, die Dämpfereingangsseite mit der Dämpferausgangsseite zu koppeln, wobei das Dämpferelement eine erste Querschnittsfläche in einer Schnittebene, in der die Drehachse angeordnet ist, aufweist. Die Pendelmasse weist in der Schnittebene eine zweite Querschnittsfläche auf, wobei ein Verhältnis der zweiten Querschnittsfläche zu der ersten Querschnittsfläche einen Wert aufweist, der in einem Bereich von 0,06 bis 6,3, vorzugsweise von 0,2 bis 1,75, besonders vorteilhafterweise 0,25 bis 1,2 liegt. Durch diese Konstruktionsrichtlinie können die beiden Fliehkraftpendel auf unterschiedliche Haupterregerordnungen abgestimmt werden, so dass die Fliehkraftpendel auch für einen Hubkolbenmotor mit Zylinderabschaltung sowohl bei aktivierter als auch bei deaktivierter Zylinderabschaltung geeignet sind.

In einer weiteren Ausführungsform umfasst das Dämpfersystem wenigstens eine Dämpfereinrichtung, wobei die Dämpfereinrichtung eine Dämpfereingangsseite und eine Dämpferausgangsseite aufweist. Die Dämpfereinrichtung umfasst wenigstens ein Energiespeicherelement, wobei das Energiespeicherelement ausgebildet ist, die Dämpfereingangsseite mit der Dämpferausgangsseite zu koppeln, wobei das Energiespeicherelement einen ersten Dämpferbetriebszustand und einen zweiten Dämpferbetriebszustand aufweist, wobei in dem ersten Dämpferbetriebszustand das Energiespeicherelement ein weicheres Dämpferverhalten als im zweiten Dämpferbetriebszustand aufweist, wobei die Dämpfungsanordnung ausgebildet ist, im ersten Dämpferbetriebszustand 20 bis 80 Prozent, vorteilhafterweise 30 bis 70 Prozent eines maximal mit der Dämpfereinrichtung übertragbaren Drehmoments zu übertragen. Auf diese Weise kann die Dämpfereinrichtung sowohl für einen Betrieb des Hubkolbenmotors mit Zylinderabschaltung als auch für den Hubkolbenmotor mit deaktivierter Zylinderabschaltung angepasst werden, wobei vorteilhafterweise das weichere Dämpferverhalten im ersten Dämpferbereich auf den Hubkolbenmotor mit Zylinderabschaltung abgestimmt ist.

In einer weiteren Ausführungsform ist ein frequenzabhängiger Tilger vorgesehen, wobei der Tilger wenigstens eine Tilgermasse und ein Tilgerfederelement umfasst, wobei die Tilgermasse mit dem Tilgerfederelement gekoppelt ist, wobei das Tilgerfederelement mit einer weiteren Komponente, insbesondere mit einem der beiden Fliehkraftpendel gekoppelt ist.

In einer weiteren Ausführungsform weist ein Verhältnis einer Massenträgheit der Pendelmasse eines der beiden Fliehkraftpendel zu einer Massenträgheit der Rotationsmasse an der die Pendelmasse angeordnet ist, einen Wert auf, der in einem Bereich von 0,06 bis 2, vorzugsweise in einem Bereich von 0,15 bis 0,6 liegt.

Besonders vorteilhaft ist, wenn die Drehmomentübertragungseinrichtung als Torsionsdämpfer oder als Turbinentorsionsdämpfer oder als Reihentorsionsdämpfer oder als Reihenturbinentorsionsdämpfer oder als Doppeltorsionsdämpfer ausgebildet ist.

Weiter wurde erkannt, dass ein verbesserter Antriebsstrang mit einer Drehmomentübertragungseinrichtung dadurch bereitgestellt werden kann, dass die Drehmomentübertragungseinrichtung wie oben beschrieben ausgebildet ist und ein Hubkolbenmotor vorgesehen ist. Die Drehmomentübertragungseinrichtung ist mit dem Hubkolbenmotor gekoppelt. Der Hubkolbenmotor weist einen ersten und einen zweiten Betriebszustand auf. In dem ersten Betriebszustand wird ein Drehmoment mittels einer ersten Anzahl von aktiven Zylindern und in einem zweiten Betriebszustand ein Drehmoment mit einer zweiten Anzahl von aktiven Zylindern der Drehmomentübertragungseinrichtung bereitgestellt. Der Hubkolbenmotor weist in dem ersten Betriebszustand die erste Haupterregerordnung und in dem zweiten Betriebszustand die zweite Haupterregerordnung auf.

Diese Ausgestaltung hat den Vorteil, dass die Drehmomentübertragungseinrichtung sowohl für den Hubkolbenmotor im ersten Betriebszustand als auch für den Hubkolbenmotor im zweiten Betriebszustand abgestimmt werden kann.

Nachfolgend wird die Erfindung anhand von Figuren näher erläutert. Dabei zeigen:

Figur 1 eine Legende von Elementen einer Drehmomentübertragungseinrichtung, die in den nachfolgenden Figuren verwendet werden;

Figur 2 eine schematische Darstellung einer Drehmomentübertragungseinrichtung gemäß einer ersten Ausführungsform;

Figur 3 ein erstes Diagramm einer Schwingungsamplitude, aufgetragen über einer Motordrehzahl eines Vierzylinder-Hubkolbenmotors im Vierzylinderbetrieb mit Fliehkraftpendel, die nicht auf eine Haupterregerordnung des Hubkolbenmotors im Zweizylinderbetrieb abgestimmt ist;

Figur 4      ein zweites Diagramm einer Schwingungsamplitude, aufgetragen über einer Motordrehzahl eines Vierzylinder-Hubkolbenmotors im Zweizylinderbetrieb mit Fliehkraftpendel, die nicht auf die Haupterregerordnung des Hubkolbenmotors im Vierzylinderbetrieb abgestimmt ist;

Figur 5      ein drittes Diagramm einer Schwingungsamplitude, aufgetragen über einer Motordrehzahl eines Vierzylinder-Hubkolbenmotors im Vierzylinderbetrieb mit wenigstens einem Fliehkraftpendel, das auf eine Haupterregerordnung des Hubkolbenmotors im Zweizylinderbetrieb abgestimmt ist;

Figur 6      ein zweites Diagramm einer Schwingungsamplitude, aufgetragen über einer Motordrehzahl eines Vierzylinder-Hubkolbenmotors im Zweizylinderbetrieb mit wenigstens einem Fliehkraftpendel, das auf die Haupterregerordnung des Hubkolbenmotors im Vierzylinderbetrieb abgestimmt ist;

Figur 7      einen Halblängsschnitt durch ein Fliehkraftpendel der in Figur 2 gezeigten Drehmomentübertragungseinrichtung;

Figur 8      einen Halblängsschnitt durch das in den Figuren 2 und 7 gezeigte Fliehkraftpendel und die in Figur 2 gezeigten Energiespeichersysteme;

Figur 9      ein Diagramm, in dem ein Drehmoment über einem Verdrehwinkel aufgetragen ist;

Figur 10     eine schematische Darstellung einer Drehmomentübertragungseinrichtung gemäß einer zweiten Ausführungsform;

Figur 11     eine schematische Darstellung einer Drehmomentübertragungseinrichtung gemäß einer dritten Ausführungsform;

Figur 12     eine schematische Darstellung einer Drehmomentübertragungseinrichtung gemäß einer vierten Ausführungsform; und

Figur 13     eine schematische Darstellung einer Drehmomentübertragungseinrichtung gemäß einer fünften Ausführungsform.

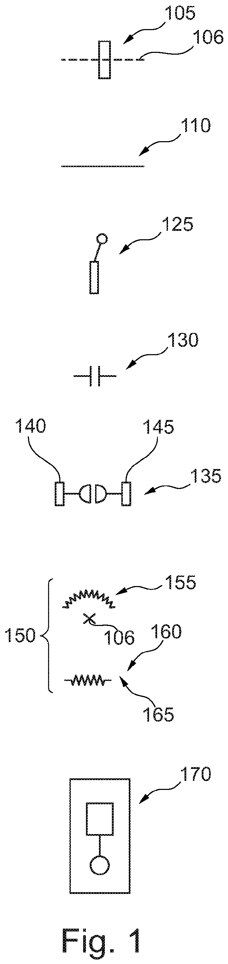

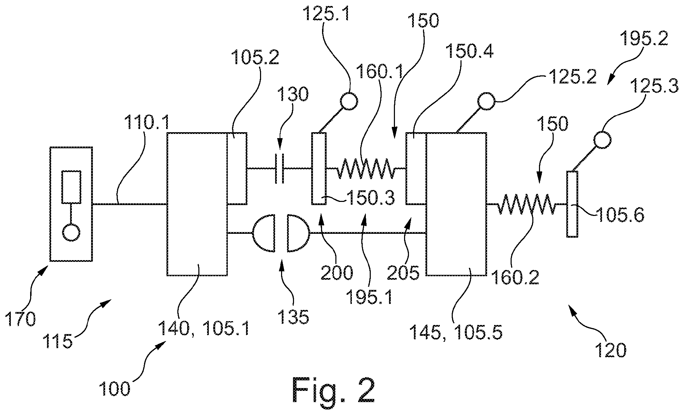

Figur 1 zeigt eine Legende von Elementen einer Drehmomentübertragungseinrichtung 10, 100, die als Symbole in den nachfolgenden Figuren 2 bis 13 verwendet werden.

Das erste Element 105 ist eine Rotationsmasse, beispielsweise eine Nabe, ein Flansch, ein Trägerblech oder ein Gussteil. Eine besonders voluminöse Rotationsmasse, wie beispielsweise ein Turbinengehäuse oder eine besonders massereiche Rotationsmasse, kann durch ein verhältnismäßig großes Rechteck dargestellt werden. Eine groß dargestellte Rotationsmasse 105 kann jedoch auch aus zeichnerischen Gründen dargestellt sein, beispielsweise, um mehrere an der Rotationsmasse 105 eingreifende Kraftschlüsse bzw. Drehmoment übersichtlich darzustellen.

Eine strichförmige Verbindungslinie stellt eine Drehmomentübertragung 110 dar. In den Figuren 2 bis 13 ist die am weitesten links dargestellte Drehmomentübertragung 110 eine Eingangsseite 115, und die am weitesten rechts dargestellte Drehmomentübertragung 110 eine Ausgangsseite 120. Die Eingangsseite 115 ist dazu eingerichtet, mit einer Brennkraftmaschine, insbesondere mit einem Hubkolbenmotor 170, verbunden zu werden und die Ausgangsseite 120 ist dazu eingerichtet, mit einem Getriebe (nicht dargestellt) verbunden zu werden. Der Hubkolbenmotor 170, die Drehmomentübertragungseinrichtung 100 und das Getriebe sind vorzugsweise Teile eines Antriebsstrangs eines Kraftfahrzeugs, insbesondere eines Personenkraftfahrzeugs. In den folgenden Kraftflussdiagrammen der Figuren 2 bis 13 wird der Verlauf des Drehmomentflusses von der Eingangsseite 115 zur Ausgangsseite 120 von links nach rechts beschrieben. Dieser Betriebszustand der Drehmomentübertragungseinrichtung 100 stellt üblicherweise den weitaus häufigeren Fall dar. Der umgekehrte Drehmomentfluss, auch Schubbetrieb genannt, kann sich jedoch auch ergeben, wenn beispielsweise das Kraftfahrzeug mit einem Schleppmoment des Hubkolbenmotors 170 verzögert wird.

Ein Fliehkraftpendel 125 ist an der Rotationsmasse 105 derart befestigt, dass das Fliehkraftpendel 125 um eine Drehachse 106, die bezüglich der Drehachse 106 der Rotationsmasse 105 radial nach außen versetzt ist, in bzw. gegen die Drehrichtung der Rotationsmasse 105 schwingen kann. Die Rotationsmasse 105, an der das Fliehkraftpendel 125 befestigt ist, kann auch noch zusätzliche Aufgaben übernehmen, die bereits oben in Bezug auf die Rotationsmasse 105 erläutert wurden.

Eine Kupplungseinrichtung 130 ist eine Einrichtung zur Drehmomentübertragung, die steuerbar ist, um zwischen ihren entgegengesetzten Enden ein Drehmoment selektiv zu übertragen oder zu trennen. Die Kupplungseinrichtung 130 kann beispielsweise als Trockenkupplung, Mehrscheibenkupplung, oder eine in einem Ölbad laufende Nasskupplung ausgebildet sein. Zur Betätigung der Kupplungseinrichtung 130 kann beispielsweise eine hydraulisch ausgebildete Ausrückeinheit vorgesehen sein. Selbstverständlich ist auch eine elektrische Betätigung oder eine mechanische Betätigung der Kupplungseinrichtung 130 denkbar.

Ein Wandler 135 stellt eine Drehmomentübertragung dar, die im hydrostatischen Zusammenspiel zwischen einem Pumpenrad 140 und einem Turbinenrad 145 herstellbar ist. Ein von dem Wandler 135 übertragenes Drehmoment ist dabei abhängig von einem Drehzahlunterschied zwischen dem Turbinenrad 145 und dem Pumpenrad 140. Dabei kann aufgrund hydrostatischer Effekte eine Drehmomentüberhöhung auftreten, so dass der Wandler 135 im Wesentlichen als Drehzahluntersetzer arbeitet. Bei einer Angleichung der Drehzahlen des Turbinenrads 145 zum Pumpenrad 140 sinkt das mittels des Wandlers 135 übertragbare Drehmoment.

Ein Energiespeichersystem 150 kann beispielsweise als Bogenfeder 155 oder als Druckfeder 160 oder als Turbinenfeder 165 ausgebildet sein. Dabei wird in der Legende kein Unterschied zwischen der Druckfeder 160 und der Turbinenfeder 165 gemacht. Das Energiespeichersystem 150 ist dabei ausgebildet, eine schwingungsdämpfende Übertragung von Drehmoment bereitzustellen.

Die Bogenfeder 155 ist dabei ein elastisches Element zur Kraftübertragung, das tangential um die Drehachse 106 verlaufend angeordnet ist. Die Druckfeder 160 weist eine ähnliche Funktionsweise wie die Bogenfeder 155 auf. Abweichend davon ist die Druckfeder 160 üblicherweise schraubenförmig ausgebildet und erstreckt sich nicht gebogen, sondern gerade entlang einer Tangente an einem Umfang eines Kreissegments um die Drehachse 106. Das Energiespeichersystem 150 kann eine oder mehre Anordnungen der Bogenfeder 155, der Druckfeder 160 und/oder der Turbinenfeder 165 aufweisen. Dabei können die Bogenfeder 155, die Druckfeder 160 und/oder die Turbinenfeder 165 parallel und/oder seriell miteinander verschaltet sein.

Die Turbinenfeder 165 kann beispielsweise innerhalb eines Turbinentilgers angeordnet sein. Dabei dient die Turbinenfeder 165 dazu, ein Drehmoment in den Wandler 135 ein- und/oder auszukoppeln. Dabei wird die Turbinenfeder 165 üblicherweise derart angeordnet, dass ein Kraftfluss zwischen dem Pumpenrad 140 und dem Turbinenrad 145 über die Turbinenfeder 165 erfolgt. Ein Hubkolbenmotor 170 weist eine Anzahl von mehreren Zylindern auf, in denen Kolben entlang einer Zylinderachse auf und ab bewegt werden. Der Betrieb des Hubkolbenmotor 170 erfolgt nach bekanntem Prinzip. Ferner ist der Hubkolbenmotor 170 üblicherweise mit einem Steuergerät (nicht dargestellt) verbunden, wobei das Steuergerät ausgebildet ist, einen oder mehrere Zylinder zu deaktivieren. Die Deaktivierung erfolgt nach dem bekannten Prinzip der Zylinderabschaltung von Hubkolbenmotoren 170. So kann beispielsweise der Hubkolbenmotor 170 vier Zylinder aufweisen, wobei im Hauptbetrieb bzw. im ersten Betriebszustand der Vierzylinder-Hubkolbenmotor mit den vier Zylindern betrieben bzw. alle vier Zylinder in regelmäßigen Abständen mit einem Kraftstoff-Luft-Gemisch versorgt werden und dieses ebenso in regelmäßigen Abständen gezündet wird. Somit sind im ersten Betriebszustand alle Zylinder aktiv, um die Abtriebsleistung bzw. das Drehmoment des Hubkolbenmotors 170 zu erzeugen. In einem Nebenbetrieb bzw. in einem zweiten Betriebszustand steuert das Steuergerät den Hubkolbenmotor 170 derart an, dass ein Teil der Zylinder, wenigstens jedoch einer, abgeschaltet wird. Üblicherweise erfolgt die Zylinderabschaltung derart, dass nur eine hälftige Anzahl von Zylindern zu dem Hauptbetrieb des Hubkolbenmotors 170 mit einem Kraftstoff-Luft-Gemisch versorgt und dieses auch gezündet wird. Somit sind im zweiten Betriebszustand bei einem Vierzylinder-Hubkolbenmotor mit Zylinderabschaltung nur zwei Zylinder zur Bereitstellung der Antriebsleistung aktiv.

Der Hubkolbenmotor 170 weist im Hauptbetrieb und im Nebenbetrieb unterschiedliche Erregerordnungen auf, die abhängig von der Anzahl der Zylinder sind, die genutzt werden, um die Antriebsleistung bereitzustellen. Die Haupterregerordnung wird dabei als q in mathematischen Formeln bezeichnet. Das Fliehkraftpendel 125 weist eine Abstimmungsordnung auf, bei der das Fliehkraftpendel 125 eine vorbestimmte Ordnung der Eingangsseite 115 besonders effektiv dämpft. Durch die Abstimmungsordnung kann das Fliehkraftpendel 125 genutzt werden, Drehschwingungen in einem mittels der Drehmomentübertragungseinrichtung 100 zu übertragenden Drehmoment gezielt zu dämpfen. Dabei kann das Fliehkraftpendel 125 besonders auf eine Grundschwingung oder eine entsprechende Schwingung höherer Ordnung des Hubkolbenmotors 170 angepasst werden.

Ferner kann wenigstens eines der Energiespeichersysteme 150 dazu genutzt werden, nicht mehr als einen vorbestimmten Winkel bzw. Winkelsegment betätigt zu werden. Die Beschränkung kann mittels konstruktiver Merkmale, insbesondere mittels Auslegung der Feder, deren Windungen bei einer Kompression, die dem vorbestimmten Winkel entspricht, aneinander aufliegen, erreicht werden. Ferner ist auch denkbar, dass ein Anschlag, eine Kulisse oder ein Bolzen zur Winkelbeschränkung vorgesehen sind.

Auch ist denkbar, dass das Energiespeichersystem 150 ein Reibelement zur Erzeugung einer vorbestimmten Reibung während des Ein- bzw. Ausfederns der Bogenfeder 155, der Druckfeder 160 oder der Turbinenfeder 165 aufweist. Die durch das Reibelement bereitgestellte Reibung kann dazu genutzt werden, ein Dämpfungsverhalten des Energiespeichersystems 150 zu modifizieren. Insbesondere ist auch denkbar, dass dabei das Energiespeichersystem 150 eine Tellerfeder aufweist.

Figur 2 zeigt eine schematische Darstellung der Drehmomentübertragungseinrichtung 100. Die in Figur 2 gezeigten Elemente werden in Bezug auf Figur 1 beschrieben. Dabei werden mehrfach verbaute Elemente mit Suffixen in aufsteigender Reihenfolge bezeichnet. So ist beispielsweise eine erste Rotationsmasse als 105.1 referenziert und eine zweite Rotationsmasse als 105.2. Ebenso gilt es auch für andere Elemente.

Die Drehmomentübertragungseinrichtung 100 ist mittels einer ersten Drehmomentübertragung 110.1 mit dem Hubkolbenmotor 170 drehmomentschlüssig verbunden. Die Drehmomentübertragungseinrichtung 100 und der Hubkolbenmotor 170 sind dabei Teil eines Antriebsstrangs 10 eines Kraftfahrzeugs. Die Drehmomentübertragungseinrichtung 100 ist in der in Figur 2 gezeigten Ausführungsform als Doppeltorsionsdämpfer, auch kurz als DTD bezeichnet, ausgebildet.

Die Drehmomentübertragungseinrichtung 100 umfasst eine Kupplungseinrichtung 130 und ein Dämpfersystem 171. Das Dämpfersystem 171 umfasst Rotationsmassen 105, Dämpfereinrichtungen 195 und Fliehkraftpendel 125.

An der Eingangsseite 115 weist die Drehmomentübertragungseinrichtung 100 ein Pumpenrad 140 als erste Rotationsmasse 105.1 auf. Das Pumpenrad 140 ist dabei Teil des hydrodynamischen Wandlers 135. An dem Pumpenrad 140 ist ferner eine zweite Rotationsmasse 105.2 angeordnet. Die zweite Rotationsmasse 105.2 ist dabei Teil der Kupplungseinrichtung 130. Die Kupplungseinrichtung 130 weist zwei Schaltzustände auf. Im ersten Schaltzustand ist die Kupplungseinrichtung 130 geöffnet und erlaubt keine Drehmomentübertragung von der zweiten Rotationsmasse 105.2 an eine angeschlossene Rotationsmasse 105.3, die ausgangsseitig der Kupplungseinrichtung 130 vorgesehen ist. In dem zweiten Schaltzustand verbindet die Kupplungseinrichtung 130 die zweite Rotationsmasse 105.2 mit der dritten Rotationsmasse 105.3. In diesem Zustand kann die Kupplungseinrichtung 130 schleifen oder vollständig geschlossen sein, um das Drehmoment von der zweiten Rotationsmasse 105.2 an die dritte Rotationsmasse 110.3 zu übertragen.

An der dritten Rotationsmasse 105.3 ist ein erstes Fliehkraftpendel 125.1 angeordnet. Die dritte Rotationsmasse 105.3 ist rechtsseitig über eine erste Druckfeder 160.1 mit einer vierten Rotationsmasse 105.4 verbunden. Die vierte Rotationsmasse 105.4 ist dabei mit dem Turbinenrad 145 des Wandlers 135 verbunden. Ferner ist das Turbinenrad 145 als fünfte Rotationsmasse 105.5 ausgebildet, an dem ein zweites Fliehkraftpendel 125.2 angeordnet ist. Das Turbinenrad 145 ist ausgangsseitig über eine zweite Druckfeder 160.2 mit einer sechsten Rotationsmasse 105.6 verbunden. An der sechsten Rotationsmasse 105.6 ist ferner ein drittes Fliehkraftpendel 125.3 angeordnet.

Die Energiespeichersysteme 150 der in Figur 2 gezeigten Drehmomentübertragungseinrichtung 100 bilden mit den an dem Energiespeichersystem 150 angeschlossenen Rotationsmassen 105 jeweils eine erste Dämpfereinrichtung 195.1 aus. Die Dämpfereinrichtung 195.1 weist somit eine Dämpfereingangsseite 200, die in Figur 2 linksseitig des Energiespeichersystems 150 und eine Dämpferausgangsseite 205, die in Figur 2 rechtsseitig des Energiespeichersystems 150 angeordnet ist, auf. Wird Drehmoment über das Energiespeichersystem 150 übertragen, so verdreht sich die abtriebsseitig an der Dämpferausgangsseite 205 angeschlossene Rotationsmasse 105 gegenüber der Dämpfereingangsseite 200. Bezogen auf die erste Druckfeder 160.1 bildet somit die erste Druckfeder 160.1 mit der dritten Rotationsmasse 105.3 und der vierten Rotationsmasse 105.4 die Dämpfereinrichtung 195 aus. Selbiges gilt auch für die zweite Druckfeder 160.2 und die an der zweiten Druckfeder 160.2 angeordneten fünften und sechsten Rotationsmassen 105.5, 105.6, die eine zweite Dämpfereinrichtung 195.2 ausbilden.

Die Drehmomentübertragung über den Wandler 135 wird beispielsweise beim Anfahren eines Kraftfahrzeugs verwendet, indem die Drehmomentübertragungseinrichtung 100 ein vom Hubkolbenmotor 170 kommendes Drehmoment an Räder des Kraftfahrzeugs übermittelt, während die Kupplungseinrichtung 130 geöffnet ist. Im Stillstand des Kraftfahrzeugs steht dabei die Ausgangsseite 120 still und die Eingangsseite 115 dreht mit einer Drehzahl des Hubkolbenmotors 170. Dadurch wird mittels des Wandlers 135 ein Drehmoment übermittelt. Sollte beim Anfahren die Drehzahl des Hubkolbenmotors 170 erhöht werden, so wird ein Unterschied zwischen einer Drehgeschwindigkeit des Pumpenrads 140 und einer Drehgeschwindigkeit des Turbinenrads 145 erhöht. Dadurch wird ein durch den Wandler 135 übermitteltes Drehmoment ebenfalls erhöht. Nach dem Anfahren des Kraftfahrzeugs wird das Kraftfahrzeug üblicherweise beschleunigt, so dass die Drehzahl der Ausgangsseite 120 ansteigt. Dadurch wird der Unterschied in der Drehzahl zwischen dem Turbinenrad 145 und dem Pumpenrad 140 reduziert. Sinkt der Drehzahlunterschied zwischen dem Pumpenrad 140 und dem Turbinenrad 145 unter einen bestimmten Wert, so wird die Kupplungseinrichtung 130 derart angesteuert, dass die Kupplungseinrichtung 130 vom offenen Zustand hin in den zweiten Betriebszustand geht und schließt. Durch die geschlossene Kupplungseinrichtung 130 ist die Drehgeschwindigkeit des Pumpenrads 140 zu dem Turbinenrad 145 im Mittel gleich. Der Drehmomentfluss erfolgt im geschlossenen Zustand der Kupplungseinrichtung 130 im Wesentlichen vom Pumpenrad 140 über die Kupplungseinrichtung 130 hin zum Turbinenrad 145.

Während der beschriebenen unterschiedlichen Phasen des Betriebs der Drehmomentübertragungseinrichtung 100 sind unterschiedliche Energiespeichersysteme 150 im Drehmomentfluss zwischen der Eingangsseite 115 und der Ausgangsseite 120 eingekoppelt. Der Hubkolbenmotor 170 stellt sein Drehmoment mit Drehschwingungen bereit, die von dem Hubkolbenmotor 170 über die erste Drehmomentübertragung 110.1 in die Eingangsseite 115 der Drehmomentübertragungseinrichtung 100 eingetragen werden. Je nach Ausgestaltung der Komponenten der Drehmomentübertragungseinrichtung 100 werden die Drehschwingungen auf unterschiedliche Weise und um ein unterschiedliches Maß getilgt.

Im ersten Betriebszustand der Drehmomentübertragungseinrichtung 100, also wenn die Kupplungseinrichtung 130 geöffnet ist, werden die Drehschwingungen durch den Wandler 135 bereits teilweise durch den Wandler 135 getilgt. Die Tilgung erfolgt zum einen durch die hydrodynamische Ausgestaltung des Wandlers 135, zum anderen aber auch durch das im Verhältnis zu weiteren Komponenten der Drehmomentübertragungseinrichtung 100 mit großer Masse ausgestattete Pumpenrad 140 und das Turbinenrad 145. Die aus dem Wandler 135 ausgeleiteten Drehschwankungen werden ausgangsseitig vom Turbinenrad 145 kommend in das zweite Fliehkraftpendel 125.2 geleitet und durch dieses teilweise getilgt. Ebenso erfolgt eine weitere Tilgung der Drehschwankungen durch die zweite Druckfeder 160.2 sowie das dritte Fliehkraftpendel 125.3.

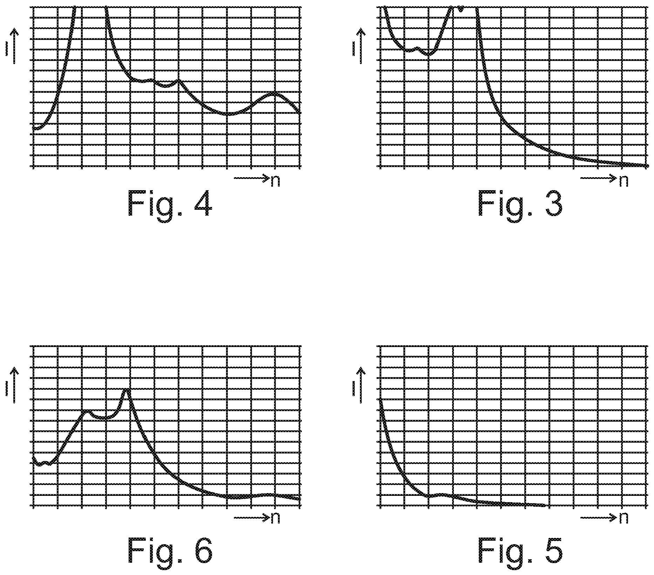

Figur 3 zeigt ein erstes Diagramm mit einer Schwingungsamplitude I, aufgetragen über einer Drehzahl n des Hubkolbenmotors 170 im ersten Betriebszustand des Hubkolbenmotors 170 bei nicht aktivierter Zylinderabschaltung, angeschlossen an einer Drehmomentübertragungseinrichtung 100, wobei keines der Fliehkraftpendel 125 auf eine Haupterregerordnung q des Hubkolbenmotors 170 im ersten Betriebszustand des Hubkolbenmotors 170 abgestimmt ist. Figur 4 zeigt ein zweites Diagramm einer Schwingungsamplitude I, aufgetragen über einer Motordrehzahl n des Hubkolbenmotors 170 im zweiten Betriebszustand des Hubkolbenmotors 170 mit aktivierter Zylinderabschaltung, wobei keines der Fliehkraftpendel 125 der Drehmomentübertragungseinrichtung 100 auf die Haupterregerordnung q des Hubkolbenmotors 170 im zweiten Betriebszustand abgestimmt ist. Figur 5 zeigt ein drittes Diagramm der Schwingungsamplitude I, aufgetragen über der Motordrehzahl n des Hubkolbenmotors 170 im ersten Betriebszustand, also bei nicht aktivierter Zylinderabschaltung, mit wenigstens einem Fliehkraftpendel 125, das auf eine Haupterregerordnung q des Hubkolbenmotors 170 im ersten Betriebszustand abgestimmt ist. Figur 6 zeigt ein viertes Diagramm der Schwingungsamplitude I, aufgetragen über der Motordrehzahl n des Hubkolbenmotors 170 im zweiten Betriebszustand des Hubkolbenmotors 170, also bei aktivierter Zylinderabschaltung, wobei wenigstens eines der Fliehkraftpendel 125 auf eine Haupterregerordnung q des Hubkolbenmotors 170 in diesem Betriebszustand abgestimmt ist.

Dabei wird unter einer Schwingungsamplitude I eine Abweichung in einer Drehzahl der Eingangsseite 115 gegenüber einer mittleren Drehzahl der Eingangsseite 115 verstanden. Die Schwingungsamplitude I weist als Einheit Umdrehungen pro Minute auf. Dabei ist von Vorteil je geringer die Schwingungsamplitude I ist, da dadurch der Antriebsstrang besonders leise wird.

Für Hubkolbenmotoren 170 mit mehreren Zylindern, bei denen ein gesamter Arbeitsumlauf in 360° betrachtet über die Anzahl der Bewegungen an den einzelnen Zylinderkolbeneinheiten beschreibbar ist, entspricht die Haupterregerordnung q der Anzahl N der Zylinder geteilt durch zwei. Im ersten Betriebszustand, also bei nicht aktivierter Zylinderabschaltung, werden diese vier Zylinder genutzt, um die Antriebsleistung des Hubkolbenmotors 170 bereitzustellen. Der Hubkolbenmotor 170 weist beispielhaft vier Zylinder (N = 4) auf. In diesem Zustand weist der Hubkolbenmotor 170 eine erste Haupterregerordnung $q_1=2$ auf. Der Hubkolbenmotor 170 kann aber auch mit Zylinderabschaltung betrieben werden, wobei die Anzahl der Zylinder, die genutzt werden, um die Antriebsleistung des Hubkolbenmotors 170 bereitzustellen, geringer ist als im ersten Betriebszustand. In Figuren 4 und 6 werden zwei Zylinder des Hubkolbenmotors 170 genutzt, um die Antriebsleistung im zweiten Betriebszustand bereitzustellen. In diesem Zustand weist der Hubkolbenmotor 170 eine zweite Haupterregerordnung $q_2=1$ auf. Die anderen zwei Zylinder sind deaktiviert und werden weder mit Brennstoff versorgt, noch wird ein Brennstoff-Luft-Gemisch in den deaktivierten Zylindern entzündet.

Vergleicht man Figur 3 und 4 miteinander, so erkennt man, dass im Zweizylinderbetrieb des Hubkolbenmotors 170, also bei aktivierter Zylinderabschaltung, vgl. Figur 4, der Hubkolbenmotor 170 ein schlechteres Schwingungsamplitudenverhalten bzw. einen größeren Wert in der Schwingungsamplitude I aufweist als im ersten Betriebszustand, wie in Figur 3 gezeigt.

Bei höheren Drehzahlen weist der Zweizylinderbetrieb des Hubkolbenmotors 170 eine höhere Schwingungsamplitude I auf und somit ein schlechteres Verhalten gegenüber der Schwingungsamplitude I des Hubkolbenmotors 170 im Vierzylinder-Betrieb.

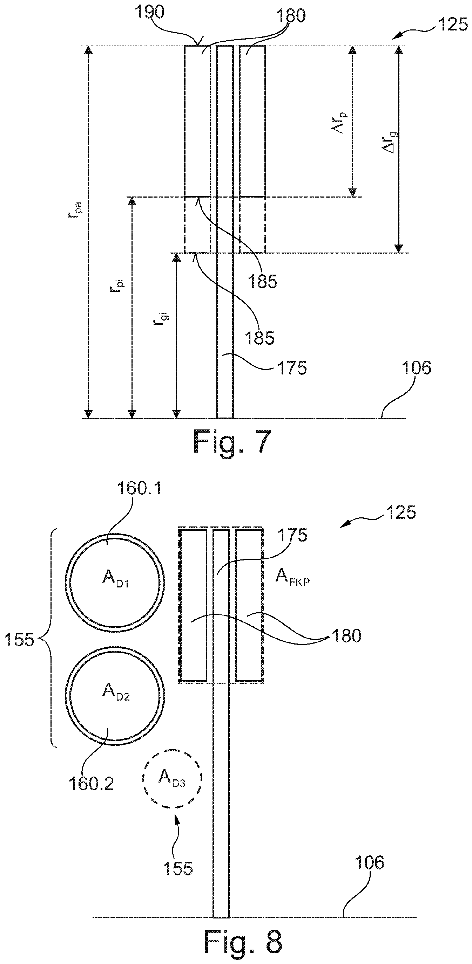

Figur 7 zeigt einen Halblängsschnitt durch ein Fliehkraftpendel 125 der in Figur 2 gezeigten Drehmomentübertragungseinrichtung 100. Das Fliehkraftpendel 125 weist einen Pendelflansch 175 auf, der drehbar um die Drehachse 106 angeordnet ist. Beidseitig des Pendelflanschs 175 sind jeweils die Pendelmassen 180 vorgesehen, die mittels nicht dargestellter Abstandsbolzen miteinander verbunden sind. Die Abstandsbolzen durchgreifen dabei den Pendelflansch 175. Die Pendelmassen 180 weisen die Eigenfrequenz $\omega$ auf. Die Pendelmassen 180 werden mittels einer nicht dargestellten Kulissenführung entlang einer Pendelbahn geführt. Die Pendelbahn verläuft dabei sowohl in Umfangsrichtung als auch radial von innen nach außen. Dabei ist die Pendelbahn derart ausgebildet, dass die Pendelmassen 180 eine Ruheposition aufweisen. Dabei wird unter der Ruheposition die Position verstanden, die die Pendelmassen 180 einnehmen, wenn das Fliehkraftpendel 125 rotiert, jedoch keine Drehschwingungen in das Fliehkraftpendel 125 eingeleitet werden. Dabei weisen in der Ruheposition die Pendelmassen 180 einen Innenradius $r_{Pi}$ auf. Dabei ist dies ein Abstand einer radial am innen liegendsten Kante 185 der Pendelmassen 180 zu der Drehachse 106. Des Weiteren weisen die Pendelmassen 180 in der Ruheposition einen Außenradius $r_{Pa}$ auf, der einem Abstand der Drehachse 106 zu einer radial am außen liegendsten Kante 190 der Pendelmassen 180 entspricht.

Selbstverständlich ist alternativ zu dem gezeigten Fliehkraftpendel 125 denkbar, dass das Fliehkraftpendel 125 einen zweiteiligen Pendelflansch 175 und eine einstückig ausgebildete Pendelmasse 180 aufweist, wobei die Pendelmasse 180 zwischen den Pendelflanschteilen 175 angeordnet ist. Die genannten Auslegungsregeln gelten selbstverständlich auch für diese Ausführungsform des Fliehkraftpendels 125.

Das Fliehkraftpendel 125 hat im Allgemeinen eine zur Drehzahl, insbesondere der Drehzahl n der Anregung gegenüber proportionale Eigenfrequenz $f_{0FKP}$, so dass Drehschwingungen mit Frequenzen, die zu der Drehzahl n in gleicher Weise proportional sind, über einen großen Drehzahlbereich tilgbar sind. Dabei gilt $f_{0FKP}$ = q · n.

Der Hubkolbenmotor 170 weist ein Frequenzverhalten über die Drehzahl n mit mehreren Eigenfrequenzen über der Drehzahl n auf. Die Eigenfrequenzen weisen dabei eine Ordnung auf.

Für eine Abstimmungsordnung $q_{FKP}$ des Fliehkraftpendels 125 gilt:

$$q_{FKP} = \sqrt{\frac{L}{l}}$$

Für eine Tilgerfrequenz des Fliehkraftpendels 125 gilt:

$$f_T = f_0 = \frac{\omega}{2 \cdot \pi}.$$

Somit ergibt sich insgesamt für kleine Schwingwinkel von Pendelmassen 180 des Fliehkraftpendels 125 folgende Gleichung:

$$f_0 = \frac{\omega}{2 \cdot \pi} \cdot \sqrt{\frac{L}{l}}$$

mit ω = Drehgeschwindigkeit, $f_0$ ist Eigenfrequenz der Pendelmasse 180, L = der Abstand einer Anlenkung der Pendelmasse 180 von der Drehachse 106 und damit der Drehmomenteinleitungsachse und I ist der Abstand des Schwerpunkts der Pendelmasse 180 zum Anlenkpunkt bzw. dieser Abstand entspricht der Pendellänge l.

Die in Figur 2 gezeigte Drehmomentübertragungseinrichtung 100 weist beispielhaft drei Fliehkraftpendel 125.1, 125.2, 125.3 auf. Selbstverständlich ist auch denkbar, dass die Drehmomentübertragungseinrichtung 100 auch nur zwei Fliehkraftpendel 125 aufweist. Um eine besonders gute Dämpfung zu erreichen, ist wenigstens eines der beiden Fliehkraftpendel 125 in seiner Abstimmungsordnung $q_{FKP}$ auf die Haupterregerordnung $q_{1/2}$ abgestimmt. Dabei wird unter einer Abstimmung verstanden, dass $q_{FKP}$ im Wesentlichen im Rahmen von Fertigungstoleranzen gleich $q_{1/2}$ ist. Dadurch kann das Dämpferverhalten der Drehmomentübertragungseinrichtung 100 verbessert werden. Besonders vorteilhaft ist hierbei, wenn wenigstens zwei Fliehkraftpendel 125 in ihrer Abstimmungsordnung $q_{FKP}$ auf die Haupterregerordnung $q_{1/2}$ abgestimmt sind.

Besonders vorteilhaft ist hierbei der Fall, dass eines der Fliehkraftpendel 125 auf die Haupterregerordnung $q_1$ mit deaktivierter Zylinderabschaltung und eines der anderen Fliehkraftpendel 125 auf die Haupterregerordnung $q_2$ des Hubkolbenmotors 170 mit aktivierter Zylinderabschaltung abgestimmt ist. Dadurch kann die in Figur 5 gezeigte Schwingungsamplitude I, aufgetragen über der Motordrehzahl n im Vierzylinder-Betrieb des Hubkolbenmotors 170, und gleichzeitig auch die in Figur 6 gezeigte Schwingungsamplitude I im Zweizylinder-Betrieb des Vierzylindermotors erreicht werden. Dies hat insbesondere den Vorteil, dass unabhängig vom Betriebszustand des Hubkolbenmotors 170 die Eigenfrequenzen des Hubkolbenmotors 170 unabhängig von der Betriebsart durch die Fliehkraftpendel 125 der Drehmomentübertragungseinrichtung 100 getilgt werden.

So ist beispielsweise in einem besonders vorteilhaften Fall das zweite Fliehkraftpendel 125.2 auf die Haupterregerordnung $q_1$ = 2 abgestimmt. Dadurch wirkt das zweite Fliehkraftpendel 125.2 besonders im Betrieb des Hubkolbenmotors 170 mit allen vier Zylindern und tilgt hierbei die in diesem Betriebszustand auftretenden Drehschwingungen. Besonders vorteilhaft ist hierbei, wenn gleichzeitig das dritte Fliehkraftpendel 125.3 an der Ausgangsseite auf die Haupterregerordnung $q_2$ = 1 abgestimmt ist. Wird das dritte Fliehkraftpendel 125.3 auf diese Ordnung abgestimmt, kann der in Figur 6 gezeigte Schwingungsamplitudenverlauf über der Drehzahl n erreicht werden. Dabei tilgt vor allem das dritte Fliehkraftpendel 125.3 Drehschwingungen im Drehmoment.

Es wird darauf hingewiesen, dass der Hubkolbenmotor 170 selbstverständlich auch eine andere Anzahl N von Zylindern aufweisen kann. So ist durchaus denkbar, dass der Hubkolbenmotor 170 als Zwölfzylindermotor, als Achtzylindermotor, als Sechszylindermotor, Dreizylindermotor oder auch als Fünfzylindermotor ausgebildet ist. Hierbei ist abhängig von der Bauweise des Hubkolbenmotors 170 denkbar, dass im zweiten Betriebszustand die Anzahl der Zylinder, die zur Bereitstellung der Antriebsleistung des Hubkolbenmotors 170 genutzt wird, halbiert wird. Auch ist denkbar, dass eine andere Anzahl von Zylindern im zweiten Betriebszustand genutzt wird, um die Antriebsleistung bereitzustellen.

Ferner wird darauf hingewiesen, dass anstelle der in Figur 2 gezeigten Fliehkraftpendel 125 selbstverständlich auch zwei oder mehrere Fliehkraftpendel 125 angeordnet sind, wobei jedes dieser Fliehkraftpendel 125, wie oben beschrieben, entweder auf die Haupterregerfrequenz q des Hubkolbenmotors 170 im ersten Betriebszustand und/oder im zweiten Betriebszustand abgestimmt sein kann.

Werden die Pendelmassen 180 entlang der Pendelbahn aus der Ruheposition geführt, so bewegen sich die Pendelmassen 180 radial nach innen hin (vgl. Fig. 7 strichliert dargestellt). Werden die Pendelmassen 180 aus der Ruheposition herausbewegt, spricht man von einem ausgelenkten Zustand der Pendelmassen 180. Im ausgelenkten Zustand weisen die Pendelmassen 180 einen Innenradius $r_{gi}$ auf. Dabei entspricht der Innenradius $r_{gi}$ im ausgelenkten Zustand einem Abstand von einer radial am innen liegendsten Kante 185 zu der Drehachse 106.

Besonders vorteilhaft ist hierbei, wenn in der Auslegung des Fliehkraftpendels 125 ein Verhältnis ($\Delta r_g$) der Differenz des Außenradius $r_{Pa}$ und dem Innradius $r_{Pi}$ zu einer zweiten Differenz des Außenradius $r_{Pa}$ im Ruhezustand und des Innenradius $r_{gi}$ im ausgelenkten Zustand zwischen 0,5 und 1, stärker bevorzugt zwischen 0,7 und 1, am meisten bevorzugt zwischen 0,9 und 1 liegt. Mathematisch ausgedrückt gilt somit:

$$\Delta r_P = r_{Pa} - r_{Pi}; \; 0{,}5 \leq \Delta r_P \leq 1; \; \text{vorzugsweise } 0{,}7 \leq \Delta r_P \leq 1, \text{ insbesondere } 0{,}9 \leq \Delta r_P \leq 1$$

$$\text{wobei } \Delta r_g = r_{Pa} - r_{gi} \text{ und } \Delta r_g : \Delta r_P / \Delta r_g \text{ gilt.}$$

Diese Auslegung soll hierbei insbesondere für alle in der Drehmomentübertragungseinrichtung 100 vorgesehenen Fliehkraftpendel 125, insbesondere jedoch für das zweite und dritte Fliehkraftpendel 125.2, 125.3, gelten.

Zusätzlich oder alternativ ist auch denkbar, dass ein Verhältnis der Abstimmungsordnung des $q_{FKP2}$ des zweiten Fliehkraftpendels 125.2 zu einer Abstimmungsordnung $q_{FKP3}$ des dritten Fliehkraftpendels 125.3 zwischen 0,35 und 2,75, vorzugsweise zwischen 0,45 und 2,3, am stärksten bevorzugt zwischen 0,5 und 2,1 liegt.

So ist beispielsweise denkbar, dass bei dem oben beschriebenen Hubkolbenmotor 170 mit Zylinderabschaltung in einer Ausführungsform das zweite Fliehkraftpendel 125.2 auf den ersten Betriebszustand des Hubkolbenmotors 170 abgestimmt ist. Dabei weist das zweite Fliehkraftpendel 125.2 eine Abstimmungsordnung $q_{FKP2} = 2 = q_1$ auf. Das dritte Fliehkraftpendel 125.3 ist in dieser Ausführungsform dann auf eine Abstimmungsordnung $q_{FKP3} = 1 = q_2$ abgestimmt, so dass ein Verhältnis aus $q_{FKP2} / q_{FKP3} = 2$ ist.

Selbstverständlich ist auch denkbar, dass das dritte Fliehkraftpendel 125.3 auf den Hubkolbenmotor 170 im zweiten Betriebszustand und das zweite Fliehkraftpendel 125.2 in seiner Abstimmungsordnung $q_{FKP2}$ auf die Haupterregerordnung $q = 2 = q_{FKP2}$ im ersten Betriebszustand des Hubkolbenmotors 170 abgestimmt ist.

Selbstverständlich ist auch denkbar, dass das zweite und dritte Fliehkraftpendel 125.2, 125.3 in ihrer Abstimmungsordnung $q_{FKP2}$, $q_{FKP3}$ auf die Haupterregerordnung $q_2$ im zweiten Betriebszustand des Hubkolbenmotors 170, in der Ausführungsform auf $q_2 = 1$, abgestimmt sind, so dass ein Verhältnis der beiden Abstimmungsordnungen $q_{FKP2} / q_{FKP3} = 1$ ist.

Alternativ ist auch denkbar, dass das zweite Fliehkraftpendel 125.2 und das dritte Fliehkraftpendel 125.3 auf die Haupterregerordnung $q_1$ des Hubkolbenmotors 170 im ersten Betriebszustand, also in der Ausführungsform auf $q_1 = 2$, abgestimmt sind, so dass ein Verhältnis der Abstimmungsordnungen $q_{FKP2} / q_{FKP3} = 2/2 = 1$ ist.

Besonders von Vorteil ist ebenso, wenn wenigstens zwei der drei Fliehkraftpendel 125 mit ihrer Abstimmungsordnung $q_{FKP}$ auf die Haupterregerordnungen $q_{1,2}$ des Hubkolbenmotors 170 in beiden Betriebszustände abgestimmt sind. So ist beispielsweise denkbar, das erste Fliehkraftpendel 125.1 auf die Haupterregerordnung $q_1$ im ersten Betriebszustand des Hubkolbenmotors 170 abzustimmen. Das zweite und dritte Fliehkraftpendel 125.2, 125.3 sind dabei in ihrer Abstimmungsordnung $q_{FKP2}$, $q_{FKP3}$ auf die Haupterregerordnung $q_2$ des Hubkolbenmotors 170 im zweiten Betriebszustand abgestimmt. Selbstverständlich sind auch andere Abstimmungsvarianten denkbar. Dabei können die beiden Abstimmungsordnungen der jeweils auf den gleichen Betriebszustand des Hubkolbenmotors 170 abgestimmten Fliehkraftpendel 125.2, 125.3 voneinander abweichen. Werden die beiden Abstimmungsordnungen $q_{FKP2}$ / $q_{FKP3}$ der in der Ausführungsform auf die Haupterregerordnung $q_2$ im zweiten Betriebszustand des Hubkolbenmotors 170 abgestimmten Fliehkraftpendel 125.2, 125.3 in ein Verhältnis zueinander gesetzt, so weist das Verhältnis $q_{FKP2} / q_{FKP3}$ einen Wert auf, der in einem Bereich von 0,67 bis 1,5, vorzugsweise in einem Bereich von 0,8 bis 1,2, am stärksten bevorzugt in einem Bereich von 0,9 bis 1,1 liegt.

Die Abstimmungsordnung $q_{FKP}$ des Fliehkraftpendel 125 wird neben der Ausgestaltung der Pendelbahn auch durch die Pendelmasse 180 beeinflusst. Die Pendelmasse 180 weist, wie bereits oben erläutert, eine Eigenfrequenz $\omega$ auf, über die die Abstimmungsordnung $q_{FKP}$ des Fliehkraftpendels 125 beeinflussbar ist. So ist von Vorteil, dass beispielsweise eine Masse der Pendelmasse 180 eines der Fliehkraftpendel 125 im Verhältnis zu einer Masse der Pendelmasse 180 eines der anderen Fliehkraftpendel 125 einen Wert aufweist, der in einem Bereich von 0,15 bis 6, vorzugsweise von 0,25 bis 4, insbesondere vorteilhafterweise von 0,5 bis 2 liegt. Die Masse der Pendelmassen 180 kann beispielsweise dadurch beeinflusst werden, dass die Pendelmassen 180 eine unterschiedliche radiale Erstreckung aufweisen und/oder in axialer Richtung eine andere Erstreckung aufweisen als die anderen Pendelmassen 180. Selbstverständlich ist auch denkbar, die Masse der Pendelmassen 180 durch eine unterschiedliche Materialwahl zu beeinflussen.

Insbesondere wird darauf hingewiesen, dass jedes der Fliehkraftpendel 125 in ihrer Abstimmungsordnung $q_{FKP}$ zu der Haupterregerordnung $q$, auf die das jeweilige Fliehkraftpendel 125 abgestimmt ist, eine Differenz von der Abstimmungsordnung $q_{FKP}$ eine Abweichung von größer 2 Prozent, insbesondere größer 3 Prozent, vorzugsweise von größer 5 Prozent und eine Abweichung kleiner 20 Prozent, vorzugsweise kleiner 10 Prozent zu der Haupterregerordnung $q$, auf die das jeweilige Fliehkraftpendel 125 abgestimmt ist, aufweist.

Figur 8 zeigt einen Halblängsschnitt durch das in den Figuren 2 und 7 gezeigte Fliehkraftpendel 125 und die in Figur 2 gezeigten Energiespeichersysteme 150.

Dabei sind die Energiespeichersysteme 150 schematisch in ihrer Querschnittsfläche A dargestellt. Es wird darauf hingewiesen, dass selbstverständlich die Anordnung der Energiespeichersysteme 150 auch andersartig sein kann. Die Drehmomentübertragungseinrichtung 100 weist in Figur 2 zwei Energiespeichersysteme 150, die als Druckfedern 160 ausgebildet sind, auf. Dabei sind nur zur symbolischen Darstellung die beiden Druckfedern 160.1, 160.2 linksseitig des Fliehkraftpendels 125 angeordnet. Auch das Fliehkraftpendel 125 ist hierbei symbolisch für die in der Drehmomentübertragungseinrichtung 100 vorgesehenen drei Fliehkraftpendel 125.1, 125.2, 125.3 dargestellt. Die Pendelmassen 180 des Fliehkraftpendels 125 weisen zusammen eine Querschnittsfläche $A_{FKP}$ auf. Die Querschnittsfläche des Fliehkraftpendels $A_{FKPG}$ erstreckt sich dabei sowohl zwischen den beiden Pendelmassen 180 als auch über die Querschnittsflächen der beiden Pendelmassen 180. Die Querschnittsfläche $A_{FKP}$, $A_{DG}$ bezieht sich dabei auf eine Schnittebene, in der die Drehachse 106 angeordnet ist. Die Gesamtquerschnittsfläche $A_{FKP}$ setzt sich also zusammen aus der Querschnittsfläche $A_{FKP}$ der Fliehkraftpendel 125.1, 125.2 und 125.3, so dass $A_{FKPG} = A_{FKP1} + A_{FKP2} + A_{FKP3}$ gilt. Selbiges gilt auch für die Querschnittsfläche $A_D$ der Energiespeichersysteme 150. Eine Gesamtquerschnittsfläche $A_D$ der Energiespeichersysteme 150 setzt sich zusammen aus der Summe der Querschnittsflächen $A_D$ der Energiespeichersysteme 155 150. Somit gilt für die Ausführungsform $A_{DG} = A_{D1} + A_{D2}$.

Für den Betrieb und für eine verbesserte Dämpfung durch die Drehmomentübertragungseinrichtung 100 ist von Vorteil, wenn ein Verhältnis der Gesamtfläche der Pendelmassen $A_{FKPG}$ zu der Querschnittsfläche $A_{DG}$ der Energiespeichersysteme 150 einen Wert aufweist, der in einem Bereich von 0,06 bis 6,3, stärker bevorzugt einen Wert aufweist, der in einem Bereich von 0,2 bis 1,75 und besonders vorteilhafterweise einen Wert aufweist, der in einem Bereich von 0,2 bis 1,2 liegt.

Die Querschnittsfläche sowohl des Fliehkraftpendels 125 als auch der Energiespeichersysteme 150 bezieht sich dabei auf die Querschnittfläche $A_{FKP}$, $A_{DG}$, wenn sich die Energiespeichersysteme 150 bzw. das Fliehkraftpendel 125 im Ruhezustand, also in unbetätigtem Zustand, befinden.

In Figur 8 ist symbolisch noch ein drittes Energiespeichersystem 155 aufgezeigt, um zu zeigen, dass die Energiespeichersysteme 150 einen unterschiedlichen Durchmesser aufweisen können. Ferner sind, wie in den späteren Figuren erläutert, auch Drehmomentübertragungseinrichtungen 200, 300, 400 denkbar, die eine andersartige Anzahl von Energiespeichersystemen 155, wie in Figur 2 gezeigt, aufweisen können.

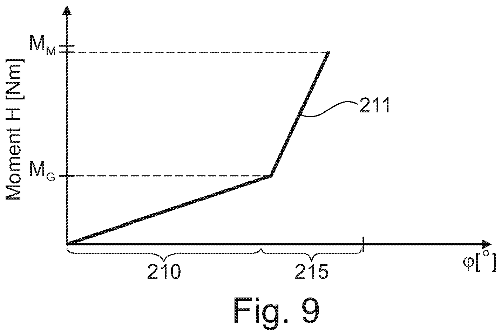

Figur 9 zeigt ein Diagramm, in dem das Drehmoment M über einen Verdrehwinkel φ aufgetragen ist. Es wird im Folgenden zusätzlich auf die in Figur 2 gezeigte Drehmomentübertragungseinrichtung 100 Bezug genommen. Dabei wird unter dem Verdrehwinkel φ eine Verdrehung der eingangsseitigen Rotationsmasse 105.4, 105.5 des Energiespeichersystems 150 zu der ausgangsseitigen Rotationsmasse 105.3, 105.6 der Dämpfereinrichtung 195 verstanden.

Dabei ist das Energiespeichersystem 150 zweistufig ausgeführt. Dabei ist beispielsweise denkbar, dass die Druckfeder 160.1 der ersten Dämpfereinrichtung 195.1 ein erstes Druckfederelement und ein zweites Druckfederelement aufweist, wobei das erste Druckfederelement radial außenseitig das zweite Druckfederelement umgreift, wobei das zweite Druckfederelement eine kürzere Längserstreckung aufweist als das erste Druckfederelement. Dabei ist auch denkbar, dass die beiden Druckfederelemente eine unterschiedliche Federsteifigkeit aufweisen. Dadurch kann eine Dämpferkennlinie, wie in Figur 9 gezeigt, erreicht werden, wobei in einem ersten Bereich 210 die Dämpferkennlinie 211 eine geringere Steigung aufweist und somit weicher ausgebildet ist als in einem zweiten Bereich 215. Der erste Bereich 210 dient dazu, Drehschwankungen des Hubkolbenmotors 170 im zweiten Betriebszustand zu dämpfen, während hingegen der zweite Bereich 215 der Dämpferkennlinie 211 dazu dient, Drehschwingungen des Hubkolbenmotors 170 im ersten Betriebszustand abzufangen. Dabei ist in der Ausführungsform ein Grenzmoment $M_G$ vorgesehen, bei dem der erste Bereich 210 in den zweiten Bereiche 215 übergeht. Das Grenzmoment $M_G$ kann beispielsweise dahingehend gewählt werden, dass das Grenzmoment $M_G$ einen Wert aufweist, der in einem Bereich von 20 bis 80 Prozent, vorzugsweise in einem Bereich von 30 bis 70 Prozent eines mit der Dämpfereinrichtung 195 übertragbaren maximalen Drehmoments M liegt.

Dabei wird in der Ausführungsform die Federrate im ersten Bereich 210 derart gewählt, dass die Federrate im ersten Bereich 210 kleiner ist als im zweiten Bereich 215.

Die eben beschriebene Auslegung für die erste Dämpfereinrichtung 195.1 kann aber auch in Gesamtschau auf die Drehmomentübertragungseinrichtung 100 übertragen werden. So kann eine Federrate der ersten Druckfeder 160.1 zu der zweiten Druckfeder 160.2 derart abgestimmt werden, dass die Dämpferkennlinie 211 einen zweistufigen Verlauf über die eben beschriebenen Abschnitte 210, 215 aufweist. Auch können zusätzliche Anschlagsmittel oder Eingriffselemente in den Druckfedern 160 vorgesehen sein, um die Zweistufigkeit der Dämpferkennlinie 211 zu erreichen. Dabei ist von besonderem Vorteil, wenn der erste Bereich 210 der Dämpferkennlinie 211 derart ausgelegt ist, dass ein Motormoment und ein Wechselmoment im Betriebsmodus mit aktiver Zylinderschaltung des Hubkolbenmotors 170 abgedeckt wird und dass der zweite Bereich 215 derart ausgelegt ist, dass das Motormoment und das Wechselmoment ohne Zylinderabschaltung des Hubkolbenmotors 170 abgedeckt wird.

Es wird darauf hingewiesen, dass selbstverständlich anstatt der Druckfeder 160 auch andersartig ausgebildete Energiespeichersysteme 150 wie Bogenfedern 155, Turbinenfedern 165 oder Zugfedern vorgesehen sein können.

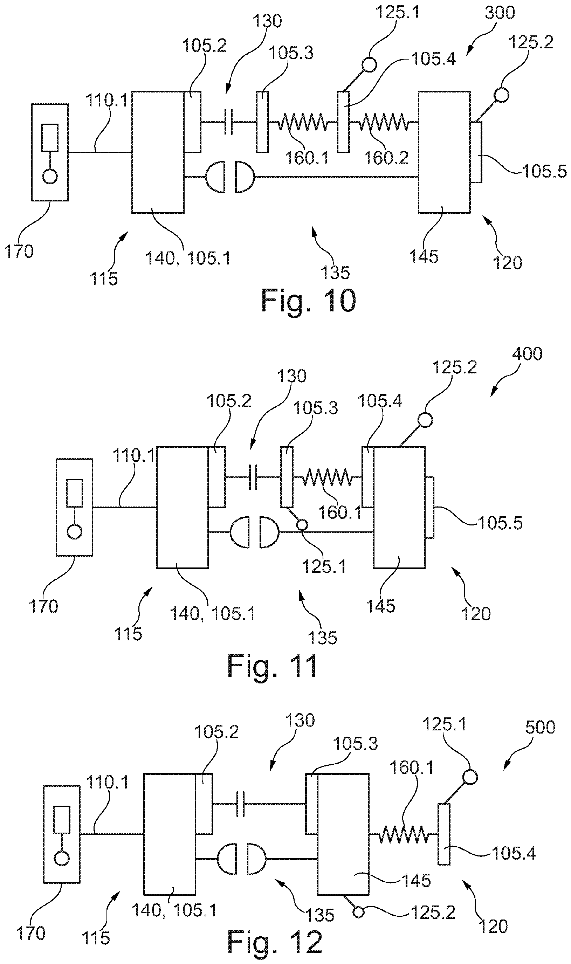

Figur 10 zeigt eine Drehmomentübertragungseinrichtung 300 gemäß einer zweiten Ausführungsform. Die Drehmomentübertragungseinrichtung 300 wird mit den in den in Figur 1 bezeichneten Elementen beschrieben. Die Drehmomentübertragungseinrichtung 300 ist dabei eingangsseitig mittels der ersten Drehmomentübertragung 110.1 mit dem Hubkolbenmotor 170 verbunden. Der Hubkolbenmotor 170 weist, wie oben beschrieben, eine Zylinderabschaltung auf. Ferner weist die Drehmomentübertragungseinrichtung 300 an der Eingangsseite 115 das Pumpenrad 140 auf, das zusammen mit einem Turbinenrad 145 den hydrodynamischen Wandler 135 ausbildet.

Zur Überbrückung des Wandlers 135 ist wie oben erläutert die Kupplungseinrichtung 130 vorgesehen. Die Kupplungseinrichtung 130 ist mittels der zweiten Rotationsmasse 105.2 mit dem Pumpenrad 140, das gleichzeitig auch die erste Rotationsmasse 105.1 ist, verbunden. Ausgangsseitig der Kupplungseinrichtung 130 ist die dritte Rotationsmasse 105.3 vorgesehen. Die dritte Rotationsmasse 105.3 ist über eine erste Druckfeder 160.1 mit einer ausgangsseitig der ersten Druckfeder 160.1 angeordneten vierten Rotationsmasse 105.4 verbunden. An der vierten Rotationsmasse 105.4 ist das erste Fliehkraftpendel 125.1 angeordnet. Die vierte Rotationsmasse 105.4 ist über die zweite Druckfeder 160.2 mit dem Turbinenrad 145 verbunden. Auf dem Turbinenrad 145 ist ferner eine fünfte Rotationsmasse 105.5 vorgesehen, die zur Fixierung des zweiten Fliehkraftpendels 125.2 dient. Über die fünfte Rotationsmasse 105.5 kann das mittels der Drehmomentübertragungseinrichtung 300 übertragene Drehmoment an weitere Komponenten eines Antriebsstrangs eines Kraftfahrzeugs abgeleitet werden. Dabei sind die Fliehkraftpendel 125.1, 125.2 in ihrer Abstimmungsordnung $q_{FKP}$ auf die Haupterregerordnung q des Hubkolbenmotors 170 in einem der beiden Betriebszustände abgestimmt. Besonders vorteilhaft ist dabei, wenn das erste Fliehkraftpendel 125.1 in seiner Abstimmungsordnung $q_{FKP1}$ auf die Haupterregerordnung $q_1$ im erstem Betriebszustand des Hubkolbenmotors 170 und das zweite Fliehkraftpendel 125.2 in seiner Abstimmungsordnung $q_{FKP2}$ auf die Haupterregerordnung $q_2$ des Hubkolbenmotors 170 im zweiten Betriebszustand abgestimmt ist. Es wird insbesondere darauf hingewiesen, dass die im Zusammenhang mit Figuren 2 bis 9 geschilderten möglichen Auslegungsformen ebenso für die Fliehkraftpendel 125 und für die Energiespeichersysteme 150 zur Ausbildung von Dämpfereinrichtungen 195 angewandt werden können. Dabei ist von besonderem Vorteil, wenn wenigstens das erste Fliehkraftpendel 125 zwischen den Druckfedern 160.1, 160.2 und das zweite Fliehkraftpendel 125.2 an der Ausgangsseite 120 der Drehmomentübertragungseinrichtung 300 angeordnet ist. Selbstverständlich ist auch eine andersartige Anordnung der Fliehkraftpendel 125, insbesondere vor den Druckfedern 160.1, 160.2 denkbar.

Figur 11 zeigt eine schematische Darstellung einer Drehmomentübertragungseinrichtung 400 gemäß einer dritten Ausführungsform. Die Drehmomentübertragungseinrichtung 400 ist an der Eingangsseite 115 mit der ersten Drehmomentübertragung 110.1 mit dem Hubkolbenmotor 170 verbunden, der, wie bereits in den anderen Ausführungsformen erläutert, über eine Zylinderabschaltung verfügt. Die Drehmomentübertragungseinrichtung 400 weist an der Eingangsseite 115 das Pumpenrad 140 als erste Rotationsmasse 105.1 auf. An dem Pumpenrad 140 ist abtriebsseitig die zweite Rotationsmasse 105.2 der Kupplungseinrichtung 130 angeordnet. Ausgangsseitig weist die Kupplungseinrichtung 130 eine dritte Rotationsmasse 105.3 auf, an der das erste Fliehkraftpendel 125.1 angeordnet ist. Die dritte Rotationsmasse 105.3 ist über eine Druckfeder 160.1 verbunden. Die Druckfeder 160.1 ist ausgangsseitig mit einer vierten Rotationsmasse 105.4 verbunden, die eine Verbindung zu dem Turbinenrad 145 des hydrodynamischen Wandlers 135 bereitstellt. Radial außenseitig ist an dem Turbinenrad 145 das zweite Fliehkraftpendel 125.2 angeordnet. Abtriebsseitig ist das Turbinenrad 145 mit einer fünften Rotationsmasse 105.5 verbunden, die als Abtriebsflansch dient. Die Drehmomentübertragungseinrichtung 400 ist dabei als Torsionsdämpfer ausgebildet und kann besonders dann günstig für einen Hubkolbenmotor 170 mit Zylinderabschaltung genutzt werden, wenn das zweite Fliehkraftpendel 125.2 an der Ausgangsseite 120 in seiner Abstimmungsordnung $q_{FKP}$ auf die Haupterregerordnung q des Hubkolbenmotors 170 im ersten und/oder zweiten Betriebszustand abgestimmt ist.

Es wird darauf hingewiesen, dass in der Ausführungsform selbstverständlich auch auf das erste Fliehkraftpendel 125 an der dritten Rotationsmasse 105 verzichtet werden kann. Auch ist denkbar, dass das erste Fliehkraftpendel 125.1 vorgesehen ist und auf das zweite Fliehkraftpendel 125.2 verzichtet wird. Auch ist denkbar, dass die genannten Fliehkraftpendel 125.1, 125.2 als Fliehkraftpendelgruppen ausgebildet sind, wobei jedes Fliehkraftpendel 125 mehrere einzelne Fliehkraftpendel, die unterschiedliche Abstimmungsordnungen aufweisen, aufweist.

Figur 12 zeigt eine schematische Darstellung einer Drehmomentübertragungseinrichtung 500 gemäß einer vierten Ausführungsform. Die Drehmomentübertragungseinrichtung 500 ist eingangsseitig, wie bereits oben erläutert, mit einem Hubkolbenmotor 170, der eine Zylinderabschaltung aufweist, über die erste Drehmomentübertragung 110.1 verbunden. Die erste Drehmomentübertragung 110.1 ist dabei mit dem Pumpenrad 140 des Wandlers 135 , das als erste Rotationsmasse 105.1 dient, verbunden. Der Wandler 135 weist ausgangsseitig das Turbinenrad 145 auf. Ferner ist, wie in den vorangehenden Ausführungsformen der Drehmomentübertragungseinrichtungen 100, 300, 400, die Kupplungseinrichtung 130 als Überbrückungskupplung ausgebildet. Die Kupplungseinrichtung 130 weist dabei die zweite Rotationsmasse 105.2 auf, die abtriebsseitig des Pumpenrads 140 angeordnet ist. Ausgangsseitig weist die Kupplungseinrichtung 130 die dritte Rotationsmasse 105.3 auf, die an dem Turbinenrad 145 angeordnet ist. Das Turbinenrad 145 ist mit einer vierten Rotationsmasse 105.4 über eine erste Druckfeder 160.1 verbunden. An der vierten Rotationsmasse 105.4 ist das erste Fliehkraftpendel 125.1 angeordnet. Die vierte Rotationsmasse 105.4 kann dabei als Flansch ausgebildet sein, über den das über die Drehmomentübertragungseinrichtung 500 übertragene Drehmoment abgegriffen wird. An der dritten Rotationsmasse 105.3 oder an dem Turbinenrad 145 kann zusätzlich ein zweites Fliehkraftpendel 125.2 vorgesehen sein. Besonders vorteilhaft ist, wenn das erste Fliehkraftpendel 125.1 ausgangsseitig der Drehmomentübertragungseinrichtung 500 mit seiner Abstimmungsordnung $q_{FKP}$ auf eine Haupterregerordnung q des Hubkolbenmotors 170 im ersten und/oder zweiten Betriebszustand abgestimmt ist. Dabei ist besonders von Vorteil, wenn die Abstimmungsordnung des ersten Fliehkraftpendels 125.1 auf die Haupterregerordnung des Hubkolbenmotors 170 im zweiten Betriebszustand, also im Betriebszustand mit Zylinderabschaltung, abgestimmt ist.

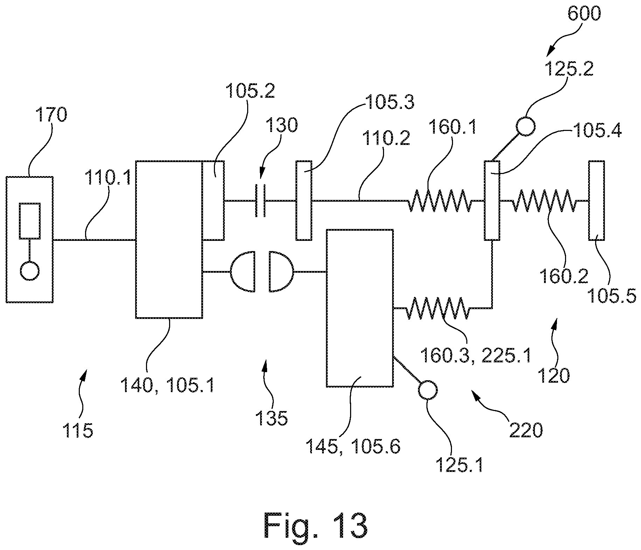

Figur 13 zeigt eine Drehmomentübertragungseinrichtung 600 gemäß einer fünften Ausführungsform. Die Drehmomentübertragungseinrichtung 600 ist an der Eingangsseite 115 über die erste Drehmomentübertragung 110.1 mit dem Hubkolbenmotor 170 verbunden. Der Hubkolbenmotor 170 ist, wie in den vorangegangenen beschriebenen Ausführungsformen der Drehmomentübertragungseinrichtungen 100, 300, 400, 500, mit einer Zylinderabschaltung ausgestattet, so dass der Hubkolbenmotor 170 über zwei Betriebszustände verfügt. Die Drehmomentübertragungseinrichtung 600 ist im Wesentlichen als Einzel- oder Reihendämpfer ausgebildet und weist den Wandler 135 auf, der eingangsseitig das Pumpenrad 140 und ausgangsseitig das Turbinenrad 145 aufweist. An dem Turbinenrad 145 ist dabei das erste Fliehkraftpendel 125.1 vorgesehen. Die Kupplungseinrichtung 130 überbrückt mittels der ersten Rotationsmasse 105.1 und der zweiten Rotationsmasse 105.2 den Wandler 135. Das Drehmoment wird dabei ausgangsseitig der Kupplungseinrichtung 130 über die dritte Rotationsmasse 105.3 an die zweite Drehmomentübertragung 110.2 weitergeleitet, das die dritte Rotationsmasse 105.3 mit der ersten Druckfeder 160.1 koppelt. Die erste Druckfeder 160.1 ist dabei ausgangsseitig mit der vierten Rotationsmasse 105.4 verbunden. An der vierten Rotationsmasse 105.4 ist dabei das zweite Fliehkraftpendel 125.2 vorgesehen. Ausgangsseitig wird die vierte Rotationsmasse 105.4 über die zweite Druckfeder 160.2 mit der fünften Rotationsmasse 105.5 verbunden, die das Drehmoment weiteren Komponenten eines Antriebsstrangs bereitstellt. Dabei bildet die fünfte Rotationsmasse 105.5 die Ausgangsseite 120 der Drehmomentübertragungseinrichtung 600.

Ausgangsseitig des Turbinenrads 145, das als sechste Rotationsmasse 105.6 dient, ist eine dritte Druckfeder 160.3 vorgesehen, die mit der vierten Rotationsmasse 105.4 verbunden ist. Der Drehmomentfluss erfolgt je nach Schaltzustand der Kupplungseinrichtung 130 vom Pumpenrad 140 auf das Turbinenrad 145 und von dort über die dritte Druckfeder 160.3 auf die vierte Rotationsmasse 105.4. Von der vierten Rotationsmasse 105.4 wird das Drehmoment über die zweite Druckfeder 160.2 an die fünfte Rotationsmasse 105.5 weitergeleitet und ist dort für weitere Komponenten eines Antriebsstrangs eines Kraftfahrzeugs abgreifbar.

Ist die Kupplungseinrichtung 130 geschlossen, so fließt das Drehmoment vom Pumpenrad 140 auf die zweite Rotationsmasse 105.2 und von dort über die Kupplungseinrichtung 130 auf die dritte Rotationsmasse 105.3. Die zweite Drehmomentübertragung 110.2 betätigt die erste Druckfeder 160.1, die über die vierte Rotationsmasse 105.4 das Drehmoment an die zweite Druckfeder 160.2 weiterleitet. Die zweite Druckfeder 160.2 gibt das Drehmoment an die Ausgangsseite 120 bzw. an die fünfte Rotationsmasse 105.5 weiter. Die vierte Rotationsmasse 105.4 ist dabei durch die beiden Druckfedern 160.1 und 160.2 derart in den Drehmomentfluss eingekoppelt, dass eine Drehmomentübertragung nicht über die vierte Rotationsmasse 105.4, sondern direkt zwischen den beiden Druckfedern 160.1 und 160.2 erfolgt.

Durch die Anbindung der als Tilgermasse dienenden sechsten Rotationsmasse 105.6, die im Wesentlichen das Turbinenrads 145 aufweist, über die als Tilgerfederelement 225.1 dienende dritte Druckfeder 160.3 befindet sich die sechste Rotationsmasse 105.6 nicht im Drehmomentfluss, stellt jedoch über seine hohe Masse einen frequenzabhänigigen Tilger 220 zur Verfügung, der Drehschwingungen im zu übertragenden Drehmoment zusätzlich dämpft, jedoch nicht im Drehmomentfluss zwischen der Eingangsseite 115 und der Ausgangsseite bei der geschlossenen Kupplungseinrichtung 130 eingebunden ist. Ebenso dämpft das am Turbinenrad 145 angeordnete erste Fliehkraftpendel 125.1 Drehschwingungen im Drehmoment, das durch die über die Druckfeder 160.3 weitergeleiteten Drehschwingungen im Drehmoment zur Schwingung angeregt wird..

Ferner ist von Vorteil, wenn ein Verhältnis einer Massenträgheit $J_{FKP}$ des Fliehkraftpendels 125 zu einer Massenträgheit der nicht im Kraftfluss angeordneten Tilgermasse 145 einen Wert aufweist, der in einem Bereich von 0,06 bis 2, vorzugsweise einen Wert aufweist, der in einem Bereich von 0,15 bis 0,6 liegt. Dabei wird unter einer Massenträgheit des Fliehkraftpendels 125 die Massenträgheit der Pendelmassen 180 verstanden, die an der Tilgermasse 145 angeordnet sind. Zu der Tilgermasse zählen alle Massen, die steif mit der nicht im Kraftfluss angeordneten sechsten Rotationsmasse 105.6 verbunden sind. Dabei zählt der Pendelflansch 175 zur Lagerung der Pendelmasse 180 des ersten Fliehkraftpendels 125.1 ebenso zu der Tilgermasse wie die das Turbinenrad 145. Selbstverständlich ist auch denkbar, dass zusätzlich zu dem Pendelflansch 175 noch weitere Rotationsmassen 105 für die sechste Rotationsmasse 105.6 vorgesehen sind, um die Massenträgheit der sechsten Rotationsmasse 105.6 zu erhöhen oder zu verändern.

Es wird darauf hingewiesen, dass selbstverständlich anstatt der oben in den Ausführungsform beschriebenen Druckfeder 160 auch andere als Energiespeicher 150 ausgebildete Federn 155, 160 denkbar sind.

Es wird darauf hingewiesen, dass die in den Figuren 1 bis 13 gezeigten Merkmale selbstverständlich untereinander kombinierbar sind. Wesentlich ist jedoch dabei die Auslegung der Fliehkraftpendel 125 mit ihren Abstimmungsordnungen $q_{FKP}$ sowohl auf die Haupterregerordnung q des Hubkolbenmotors 170 im ersten als auch im zweiten Betriebszustand. Je nach Ausgestaltung des Hubkolbenmotors 170 kann dabei von Vorteil sein, wenn das Fliehkraftpendel 125 auf den einen oder auf den anderen oder auf beide Betriebszustände des Hubkolbenmotors 170 in seiner Abstimmungsordnung $q_{FKP}$ abgestimmt ist.

**Bezugszeichenliste**

| | |
|---|---|
| 100 | Drehmomentübertragungseinrichtung |
| 105 | Rotationsmasse |
| 106 | Drehachse |
| 110 | Drehmomentübertragung |
| 115 | Eingangsseite |
| 120 | Ausgangsseite |
| 125 | Fliehkraftpendel |
| 130 | Kupplungseinrichtung |
| 135 | Wandler |
| 140 | Pumpenrad |
| 145 | Turbinenrad |
| 150 | Energiespeichersystem |
| 155 | Bogenfeder |
| 160 | Druckfeder |
| 165 | Turbinenfeder |
| 170 | Hubkolbenmotor |
| 171 | Dämpfersystem |
| 175 | Pendelflansch |
| 180 | Pendelmasse |
| 185 | Radial innen liegendeste (liegendste) Kante |
| 190 | Radial außen liegenste (liegendste) Kante |
| 195 | Dämpfereinrichtung |
| 200 | Dämpfereingangsseite |
| 205 | Dämpferausgangsseite |
| 210 | Erster Bereich / Abschnitt |
| 211 | Dämpferkennlinie |
| 215 | Zweiter Bereich / Abschnitt |
| 220 | Tilger |
| 225 | Tilgerfederelement |
| 300 | Drehmomentübertragungseinrichtung |
| 400 | Drehmomentübertragungseinrichtung |
| 500 | Drehmomentübertragungseinrichtung |
| 600 | Drehmomentübertragungseinrichtung |

**Patentansprüche**

1. Drehmomentübertragungseinrichtung (100) für einen Antriebsstrang (10) eines Kraftfahrzeugs mit einem Hubkolbenmotor (170) mit Zylinderabschaltung,

   - mit einer Eingangsseite (115), einer Ausgangsseite (120), einer Kupplungseinrichtung (130) und einem Dämpfersystem (171),
   - wobei zwischen der Eingangsseite (115) und der Ausgangsseite (120) ein Drehmomentschluss mittels der Kupplungseinrichtung (130) selektiv herstellbar ist,
   - wobei das Dämpfersystem (171) ausgebildet ist, eine Drehschwingung eines zwischen der Eingangsseite (115) und der Ausgangsseite (120) zu übertragenden Drehmoments zumindest teilweise zu reduzieren
   - wobei das Dämpfersystem (171) wenigstens ein erstes und ein zweites Fliehkraftpendel (125), wenigstens ein Energiespeichersystem (150) und eine Rotationsmasse (105) umfasst,
   - wobei wenigstens eines der beiden Fliehkraftpendel (125) mit dem Energiespeichersystem (150) gekoppelt ist,
   - wobei das andere Fliehkraftpendel (125) mit der Rotationsmasse (105) und die Rotationsmasse (105) mit dem Energiespeichersystem (150) gekoppelt ist, **dadurch gekennzeichnet, dass** eine Abstimmungsordnung des ersten Fliehkraftpendels (125) zu einer Abstimmungsordnung des zweiten Fliehkraftpendels (125) ein Verhältnis mit einem Wert aufweist, der in einem Bereich von 0,35 bis 2,75, vorzugsweise 0,45 bis 2,3, insbesondere vorzugsweise 0,5 bis 2,1 liegt.

2. Drehmomentübertragungseinrichtung (100) nach Anspruch 1, **dadurch gekennzeichnet, dass** der Hubkolbenmotor (170) eine erste vordefinierte Haupterregerordnung aufweist, wobei wenigstens das erste und/oder das zweite Fliehkraftpendel (125) in seiner Abstimmungsordnung eine Abweichung von größer 2 Prozent, insbesondere größer 3 Prozent, vorzugsweise von größer 5 Prozent und kleiner 20 Prozent, vorzugsweise 10 Prozent, zu der ersten Haupterregerordnung aufweist.

3. Drehmomentübertragungseinrichtung (100) nach Anspruch 1 oder 2, **dadurch gekennzeichnet, dass**

   - der Hubkolbenmotor (170) eine erste vordefinierte Haupterregerordnung und eine zweite vordefinierte Haupterregerordnung aufweist, die unterschiedlich zu der ersten Haupterregerordnung ist,
- wobei das zweite Fliehkraftpendel (125) in seiner Abstimmungsordnung auf die zweite Haupterregerordnung des Hubkolbenmotors (170) abgestimmt ist.

4. Drehmomentübertragungseinrichtung (100) nach einem der Ansprüche 1 bis 3, **dadurch gekennzeichnet, dass**

- der Hubkolbenmotor (170) eine erste vordefinierte Haupterregerordnung aufweist,
- wobei die beiden Fliehkraftpendel (125) mit jeweils ihrer Abstimmungsordnung auf die erste Haupterregerordnung abgestimmt sind,
- wobei das Verhältnis der beiden Abstimmungsordnungen einen Wert aufweist, der in einem Bereich von 0,67 bis 1,5 vorzugsweise 0,8 bis 1,2, insbesondere vorzugsweise 0,9 bis 1,1 liegt.

5. Drehmomentübertragungseinrichtung (100) nach einem der Ansprüche 1 bis 4, **dadurch gekennzeichnet, dass**

- wenigstens eines der beiden Fliehkraftpendel (125) einen Pendelflansch (175) und wenigstens eine Pendelmasse (180) aufweist,
- wobei die Pendelmasse (180) sich radial von innen nach außen erstreckt,
- wobei die Pendelmasse (180) mittels einer Kulissenführung mit dem Pendelflansch (175) gekoppelt ist,
- wobei die Kulissenführung ausgebildet ist, die Pendelmasse (180) entlang einer Pendelbahn zu führen,
- wobei die Pendelbahn derart führt, dass die Pendelmasse (180) eine erste Position und eine zweite radial innen liegend zur ersten Position angeordnete Position aufweist,
- wobei die Pendelmasse (180) in jeder der beiden Positionen radial innen einen ersten Abstand und radial außen einen zweiten Abstand zu der Drehachse (110) aufweist,
- wobei ein Verhältnis aus einer Differenz des ersten Abstands und des zweiten Abstands in der ersten Position zu einer Differenz des ersten Abstands in der ersten Position und dem zweiten Abstand in der zweiten Position einen Wert aufweist, der in einem Bereich von 0,5 bis 1, insbesondere 0,7 bis 1, besonders vorteilhafterweise zwischen 0,9 bis 1 liegt.

6. Drehmomentübertragungseinrichtung (100) nach einem der Ansprüche 1 bis 5, **dadurch gekennzeichnet, dass**

- wenigstens beide Fliehkraftpendel (125) wenigstens jeweils einen Pendelflansch (175) und wenigstens jeweils eine Pendelmasse (180) aufweisen,
- wobei die Pendelmasse (180) jedes Fliehkraftpendels (125) mittels jeweils einer Kulissenführung mit dem korrespondierenden Pendelflansch (175) gekoppelt ist,
- wobei eine Masse einer Pendelmasse (180) des einen Fliehkraftpendels (125) ein Verhältnis zu einer Masse der Pendelmasse (180) des anderen Fliehkraftpendels (125) mit einem Wert aufweist, der in einem Bereich von 0,15 bis 6, vorzugsweise von 0,25 bis 4, insbesondere vorteilhafterweise von 0,5 bis 2, liegt.

7. Drehmomentübertragungseinrichtung (100) nach Anspruch 5 oder 6, **dadurch gekennzeichnet, dass**,

- das Dämpfersystem (171) eine Dämpfereinrichtung (195) mit einer Dämpfereingangsseite (200) und eine Dämpferausgangsseite (205) umfasst,
- wobei die Dämpfereinrichtung (195) wenigstens ein Dämpferelement (155, 160, 165) umfasst,
- wobei das Dämpferelement (155, 160, 165) ausgebildet ist, die Dämpfereingangsseite (200) mit der Dämpferausgangsseite (205) zu koppeln,
- wobei das Dämpferelement (155, 160, 165) eine erste Querschnittsfläche in einer Schnittebene, in der die Drehachse (110) angeordnet ist, aufweist,
- wobei die Pendelmasse (180) in der Schnittebene eine zweite Querschnittsfläche aufweist,
- wobei ein Verhältnis der zweiten Querschnittsfläche zu der ersten Querschnittsfläche einen Wert aufweist, der in einem Bereich von 0,06 bis 6,3, vorzugsweise von 0,2 bis 1,75, besonders vorteilhafterweise 0,2 bis 1,2 liegt.

8. Drehmomentübertragungseinrichtung (100) nach einem der Ansprüche 1 bis 7, **dadurch gekennzeichnet, dass**

- das Dämpfersystem (171) eine Dämpfereinrichtung (195) mit einer Dämpfereingangsseite (200) und eine Dämpferausgangsseite (205) umfasst,
- wobei die Dämpfereinrichtung (195) wenigstens ein Dämpferelement (155, 160, 165) umfasst,
- wobei das Dämpferelement (155, 160, 165) ausgebildet ist, die Dämpfereingangsseite (200) mit der Dämpferausgangsseite (205) zu koppeln,

- wobei das Dämpferelement (155, 160, 165) einen ersten Dämpferbetriebszustand und einen zweiten Dämpferbetriebszustand aufweist,
- wobei in dem ersten Dämpferbetriebszustand das Dämpfungselement ein weicheres Dämpferverhalten als im zweiten Dämpferbetriebszustand aufweist,
- wobei die Dämpfereinrichtung (195) ausgebildet ist, im ersten Dämpferbetriebszustand 20 bis 80 Prozent, insbesondere vorteilhafterweise 30 bis 70 Prozent, eines maximal mit der Dämpfereinrichtung (195) übertragbaren Drehmoments zu übertragen.

9. Drehmomentübertragungseinrichtung (100) nach einem der Ansprüche 1 bis 8, **dadurch gekennzeichnet, dass** ein frequenzabhängiger Tilger (220) vorgesehen ist, wobei der Tilger (220) wenigstens eine Tilgermasse (105) und ein Tilgerfederelement (225) umfasst, wobei die Tilgermasse (105) mit dem Tilgerfederelement (225) gekoppelt ist, wobei die Tilgermasse (105) mit einer weiteren Komponente (105), insbesondere mit einem Fliehkraftpendel (125) gekoppelt ist.

## Claims

1. Torque transmission device (100) for a drive train (10) of a motor vehicle with a reciprocating piston engine (170) having cylinder shut-off,

   - with an input side (115), an output side (120), a clutch device (130) and a damper system (171),
   - wherein a torque lock can be selectively produced between the input side (115) and the output side (120) by means of the clutch device (130),
   - wherein the damper system (171) is configured to at least partially reduce a torsional vibration of a torque to be transmitted between the input side (115) and the output side (120),
   - wherein the damper system (171) comprises at least one first and one second centrifugal force pendulum (125), at least one energy storage system (150) and a rotational mass (105),
   - wherein at least one of the two centrifugal force pendulums (125) is coupled to the energy storage system (150),
   - wherein the other centrifugal force pendulum (125) is coupled to the rotational mass (105) and the rotational mass (105) is coupled to the energy storage system (150),

   **characterized in that** an order of matching of the first centrifugal force pendulum (125) to an order of matching of the second centrifugal force pendulum (125) has a ratio with a value which lies within a range of 0.35 to 2.75, preferably 0.45 to 2.3, particularly preferably 0.5 to 2.1.

2. Torque transmission device (100) according to Claim 1, **characterized in that** the reciprocating piston engine (170) has a first predefined main order of excitation, wherein at least the first and/or second centrifugal force pendulum (125) in its order of matching has a deviation of greater than 2%, in particular greater than 3%, preferably of greater than 5% and less than 20%, preferably 10%, with respect to the first main order of excitation.

3. Torque transmission device (100) according to Claim 1 or 2, **characterized in that**

   - the reciprocating piston engine (170) has a first predefined main order of excitation and a second predefined main order of excitation which is different from the first main order of excitation,
   - wherein the second centrifugal force pendulum (125) is matched in its order of matching to the second main order of excitation of the reciprocating piston engine (170).

4. Torque transmission device (100) according to one of Claims 1 to 3, **characterized in that**

   - the reciprocating piston engine (170) has a first predefined main order of excitation,
   - wherein the two centrifugal force pendulums (125) are matched with their respective order of matching to the first main order to excitation,
   - wherein the ratio of the two orders of matching have a value which lies within a range of 0.67 to 1.5, preferably 0.8 to 1.2, particularly preferably 0.9 to 1.1.

5. Torque transmission device (100) according to one of Claims 1 to 4, **characterized in that**

   - at least one of the two centrifugal forcespendulums (125) has a pendulum flange (175) and at least one pendulum mass (180),
   - wherein the pendulum mass (180) extends radially from the inside outwards,
   - wherein the pendulum mass (180) is coupled to the pendulum flange (175) by means of slotted guide,
   - wherein the slotted guide is configured to guide the pendulum mass (180) along a pendulum path,
   - wherein the guiding by the pendulum path is such that the pendulum mass (180) has a first position and a second position arranged radially on the inside with respect to the first position,
   - wherein, in each of the two positions, the pendulum mass (180) is at a first distance radially on the inside and at a second distance radially on the outside from the axis of rotation (110),
- wherein a ratio from a difference of the first distance and of the second distance in the first position to a difference of the first distance in the first position and the second distance in the second position has a value which lies within a range of 0.5 to 1, in particular 0.7 to 1, particularly advantageous between 0.9 and 1.

6. Torque transmission device (100) according to one of Claims 1 to 5, **characterized in that**

- at least the two centrifugal force pendulums (125) have at least in each case one pendulum flange (175) and at least in each case one pendulum mass (180),
- wherein the pendulum mass (180) of each centrifugal force pendulum (125) is coupled to the corresponding pendulum flange (175) by means of a respective slotted guide,
- wherein a mass of a pendulum mass (180) of the one centrifugal force pendulum (125) has a ratio to a mass of the pendulum mass (180) of the other centrifugal force pendulum (125) with a value which lies within a range of 0.15 to 6, preferably of 0.25 to 4, particularly advantageously of 0.5 to 2.

7. Torque transmission device (100) according to Claim 5 or 6, **characterized in that**

- the damper system (171) comprises a damper device (195) with a damper input side (200) and a damper output side (205),
- wherein the damper device (195) comprises at least one damper element (155, 160, 165),
- wherein the damper element (155, 160, 165) is configured to couple the damper input side (200) to the damper output side (205),
- wherein the damper element (155, 160, 165) has a first cross-sectional area in a sectional plane in which the axis of rotation (110) is arranged,
- wherein the pendulum mass (180) has a second cross-sectional area in the sectional plane,
- wherein a ratio of the second cross-sectional area to the first cross-sectional area has a value which lies within a range of 0.06 to 6.3, preferably of 0.2 to 1.75, particularly advantageously 0.2 to 1.2.

8. Torque transmission device (100) according to one of Claims 1 to 7, **characterized in that**

- the damper system (171) comprises a damper device (195) with a damper input side (200) and a damper output side (205),
- wherein the damper device (195) comprises at least one damper element (155, 160, 165),
- wherein the damper element (155, 160, 165) is configured to couple the damper input side (200) to the damper output side (205),
- wherein the damper element (155, 160, 165) has a first damper operating state and a second damper operating state,
- wherein, in the first damper operating state, the damping element has a softer damper behaviour than in the second damper operating state,
- wherein the damper device (195) is configured to transmit 20 to 80%, particularly advantageously 30 to 70%, of a torque which can be maximally transmitted with the damper device (195), in the first damper operating state.

9. Torque transmission device (100) according to one of Claims 1 to 8, **characterized in that** a frequency-dependent absorber (220) is provided, wherein the absorber (220) comprises at least one absorber mass (105) and an absorber spring element (225), wherein the absorber mass (105) is coupled to the absorber spring element (225), wherein the absorber mass (105) is coupled to a further component (105), in particular to a centrifugal force pendulum (125).

**Revendications**

1. Dispositif de transmission de couple (100) destinée à une chaîne cinématique (10) d'un véhicule automobile équipé d'un moteur à pistons alternatifs (170) avec désactivation des cylindres, ledit dispositif comprenant :

- un côté entrée (115), un côté sortie (120), un moyen d'accouplement (130) et un système amortisseur (171),
- un shunt de couple pouvant être réalisé de manière sélective entre le côté entrée (115) et le côté sortie (120) au moyen du dispositif d'accouplement (130),
- le système amortisseur (171) étant adapté pour réduire au moins partiellement une vibration de torsion d'un couple à transmettre entre le côté entrée (115) et le côté sortie (120)
- le système amortisseur (171) comprenant au moins un premier et un deuxième pendule centrifuge (125), au moins un système accumulateur d'énergie (150) et une masse rotative (105),
- l'un au moins des deux pendules centrifuges (125) étant accouplé au système accumulateur d'énergie (150),
- l'autre pendule centrifuge (125) étant accouplé à la masse rotative (105) et la masse rotative (105) étant accouplée au système accumulateur d'énergie (150),

**caractérisé en ce qu'**un ordre de réglage du premier pendule centrifuge (125) par rapport à un ordre de réglage du deuxième pendule centrifuge (125) présente un rapport d'une valeur située dans une gamme allant de 0,35 à 2,75, de préférence de 0,45 à 2,3, de manière particulièrement préférée de 0,5 à 2,1.

2. Dispositif de transmission de couple (100) selon la revendication 1, **caractérisé en ce que** le moteur à pistons alternatifs (170) présente un premier ordre d'excitation principal prédéfini, au moins le premier et/ou le deuxième pendule centrifuge (125) présentant dans son ordre de réglage un écart supérieur à 2 %, en particulier supérieur à 3 %, de préférence supérieur à 5 % et inférieur à 20%, de préférence de 10 %, par rapport au premier ordre d'excitation principal.

3. Dispositif de transmission de couple (100) selon la revendication 1 ou 2, **caractérisé en ce que**

 - le moteur à pistons alternatifs (170) présente un premier ordre d'excitation principal prédéfini et un deuxième ordre d'excitation principal prédéfini qui est différent du premier ordre d'excitation principal,
 - le deuxième pendule centrifuge (125) est réglé dans son ordre de réglage sur le deuxième ordre d'excitation principal du moteur à pistons alternatifs (170) .

4. Dispositif de transmission de couple (100) selon l'une des revendications 1 à 3, **caractérisé en ce que**

 - le moteur à pistons alternatifs (170) présente un premier ordre d'excitation principal prédéfini,
 - les deux pendules centrifuges (125) sont réglés avec leur ordre d'excitation respectif sur le premier ordre d'excitation principal,
 - le rapport des deux ordres de réglage a une valeur située dans une gamme allant de 0,67 à 1,5, de préférence de 0,8 à 1,2, de manière particulièrement préférée de 0,9 à 1,1.

5. Dispositif de transmission de couple (100) selon l'une des revendications 1 à 4, **caractérisé en ce que**

 - au moins un des deux pendules centrifuges (125) comporte une bride de pendule (175) et au moins une masse de pendule (180),
 - la masse de pendule (180) s'étendant radialement de l'intérieur vers l'extérieur,

 - la masse de pendule (180) étant accouplée à la bride de pendule (175) au moyen d'un guide de coulisse,
 - le guide de coulisse étant conçu pour guider la masse de pendule (180) le long d'une trajectoire de pendule,
 - la trajectoire de pendule débouchant de sorte que la masse de pendule (180) ait une première position et une deuxième position disposée radialement vers l'intérieur par rapport à la première position,
 - la masse de pendule (180) étant disposée dans chacune des deux positions radialement vers l'intérieur à une première distance et radialement vers l'extérieur à une deuxième distance de l'axe de rotation (110),
 - le rapport de la différence entre la première distance et la deuxième distance dans la première position à la différence entre la première distance dans la première position et la deuxième distance dans la deuxième position ayant une valeur dans la gamme allant de 0,5 à 1, en particulier de 0,7 à 1, de manière particulièrement préférée de 0,9 à 1.

6. Dispositif de transmission de couple (100) selon l'une des revendications 1 à 5, **caractérisé en ce que**

 - au moins les deux pendules centrifuges (125) comportent chacun au moins une bride de pendule (175) et au moins une masse de pendule (180),
 - la masse de pendule (180) de chaque pendule centrifuge (125) étant accouplée à la bride de pendule (175) correspondante au moyen d'un guide de coulisse respectif,
 - la masse d'une masse de pendule (180) de l'un des pendules centrifuge (125) ayant un rapport à la masse de la masse de pendule (180) de l'autre pendule centrifuge (125) d'une valeur dans la gamme allant de 0,15 à 6, de préférence de 0,25 à 4, de manière en particulier préférée de 0,5 à 2.

7. Dispositif de transmission de couple (100) selon la revendication 5 ou 6, **caractérisé en ce que**

 - le système amortisseur (171) comprend un moyen amortisseur (195) comportant un côté entrée (200) et un côté sortie (205),
 - le moyen amortisseur (195) comprenant au moins un élément amortisseur (155, 160, 165),
 - l'élément amortisseur (155, 160, 165) étant conçu pour accoupler le côté entrée (200) au côté sortie (205),
 - l'élément amortisseur (155, 160, 165) ayant une première aire en coupe transversale dans un plan de coupe dans lequel est disposé l'axe de rotation (110),
- la masse de pendule (180) ayant une deuxième aire en coupe transversale dans le plan de coupe,
- le rapport de la deuxième aire en coupe transversale sur la première aire en coupe transversale ayant une valeur située dans une gamme allant de 0,06 à 6,3, de préférence de 0,2 à 1,75, de manière particulièrement préférée de 0,2 à 1,2.

8. Dispositif de transmission de couple (100) selon l'une des revendications 1 à 7, **caractérisé en ce que**

- le système amortisseur (171) comprend un moyen amortisseur (195) comportant un côté entrée (200) et un côté sortie (205),
- le moyen amortisseur (195) comprenant au moins un élément amortisseur (155, 160, 165),
- l'élément amortisseur (155, 160, 165) étant conçu pour accoupler le côté entrée (200) au côté sortie (205),
- l'élément amortisseur (155, 160, 165) présentant un premier état de fonctionnement d'amortisseur et un deuxième état de fonctionnement d'amortisseur,
- dans le premier état de fonctionnement d'amortisseur, l'élément amortisseur présentant un comportement d'amortissement plus mou que dans le deuxième état de fonctionnement d'amortisseur,
- le moyen amortisseur (195) étant conçu pour transmettre, dans le premier état de fonctionnement d'amortisseur, 20 à 80 %, de manière particulièrement préférée de 30 à 70 % d'un couple maximal pouvant être transmis avec le moyen amortisseur (195).

9. Dispositif de transmission de couple (100) selon l'une des revendications 1 à 8, **caractérisé en ce qu'**un moyen d'amortissement (220) dépendant de la fréquence est prévu, le moyen d'amortissement (220) comprenant au moins une masse d'amortissement (105) et un élément à ressort (225), la masse d'amortissement (105) étant accouplée à l'élément à ressort (225), la masse d'amortissement (105) étant accouplée à un autre composant (105), en particulier un pendule centrifuge (125) .

Fig. 1

Fig. 2

Fig. 4

Fig. 3

Fig. 6

Fig. 5

Fig. 7

Fig. 8

Fig. 9

Fig. 10

Fig. 11

Fig. 12

Fig. 13

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011010342 A1